(19) Europäisches Patentamt
European Patent Office
Office européen des brevets

(11) **EP 3 414 203 B1**

(12) **EUROPÄISCHE PATENTSCHRIFT**

(45) Veröffentlichungstag und Bekanntmachung des Hinweises auf die Patenterteilung:
**06.11.2019 Patentblatt 2019/45**

(51) Int Cl.:
*C01G 23/00* (2006.01)          *C01G 30/00* (2006.01)
*C01G 39/06* (2006.01)          *C01G 41/00* (2006.01)
*C01G 49/12* (2006.01)          *C01B 17/62* (2006.01)
*C01G 9/08* (2006.01)

(21) Anmeldenummer: **16825699.8**

(22) Anmeldetag: **19.12.2016**

(86) Internationale Anmeldenummer:
**PCT/EP2016/002129**

(87) Internationale Veröffentlichungsnummer:
**WO 2017/114588 (06.07.2017 Gazette 2017/27)**

(54) **VERFAHREN UND VORRICHTUNG ZUR HERSTELLUNG VON NANOSKALIGEN METALLSULFIDEN UND NACH DEM VERFAHREN ERZEUGTE METALLSULFIDE**

PROCESS AND APPARATUS FOR THE PREPARATION OF NANOSCALE METAL SULFIDES AND METAL SULFIDE OBTAINED

PROCÉDÉ ET APPAREIL POUR LA PRÉPARATION DE SULFURES MÉTALLIQUES NANOMÉTRIQUES AINSI LES SULFURES OBTENUS PAR LEDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.12.2015 DE 102015016878**

(43) Veröffentlichungstag der Anmeldung:
**19.12.2018 Patentblatt 2018/51**

(73) Patentinhaber: **Johannes Gutenberg-Universität Mainz
55128 Mainz (DE)**

(72) Erfinder:
• **TREMEL, Wolfgang
55283 Nierstein (DE)**
• **SPETTER, Dmitri
55543 Bad Kreuznach (DE)**

(74) Vertreter: **Plate, Jürgen
Plate Schweitzer Zounek
Patentanwälte
Rheingaustrasse 196
65203 Wiesbaden (DE)**

(56) Entgegenhaltungen:
WO-A2-01/66462          CN-B- 102 849 799
CN-B- 103 101 978

• **FANG XU ET AL: "Continuous Production of IF-WS2 Nanoparticles by a Rotary Process", INORGANICS, Bd. 2, Nr. 2, 13. Juni 2014 (2014-06-13), Seiten 313-333, XP055358942, DOI: 10.3390/inorganics2020313 in der Anmeldung erwähnt**
• **JUN LI ET AL: "Synthesis of Fullerene-like WS 2 Nanoparticles in a Particulately Fluidized Bed: Kinetics and Reaction Phase Diagram", INDUSTRIAL & ENGINEERING CHEMISTRY RESEARCH., Bd. 53, Nr. 2, 15. Januar 2014 (2014-01-15), Seiten 592-600, XP055358946, US ISSN: 0888-5885, DOI: 10.1021/ie4026665 in der Anmeldung erwähnt**

**Beschreibung**

Die vorliegende Erfindung betrifft ein Verfahren zur Herstellung von nanoskaligen Metallsulfiden, worin Nanopartikel aus Metall oder Metalloxid einer Ofenkammer kontinuierlich zugeführt und bei einer Temperatur von 600 bis 900 °C während einer Dauer von 30 bis 200 min mittels eines Prozessgases aus 10 bis 25 Vol.-% $H_2$, 75 bis 90 Vol.-% $H_2S$ und 0 bis 15 Vol.-% eines Inertgases, gewählt aus $N_2$, Ar oder einer Mischung davon, sulfidiert werden.

Ein nach dem erfindungsgemäßen Verfahren hergestelltes Material besteht aus 500 bis 100000 g Nanopartikeln aus Metallsulfid mit einem äquivalenten Durchmesser von 10 bis 200 nm.

Im Weiteren betrifft die Erfindung eine Vorrichtung zur Herstellung von Nanopartikeln aus Metallsulfid, die eine Ofenkammer mit einer Heizung umfasst, wobei die Heizung dafür eingerichtet ist, die Wandung der Ofenkammer teilweise oder vollständig auf eine Temperatur von 600 bis 1200 °C aufzuheizen.

Nanoskalige Metallsulfide und Verfahren zu deren Herstellung sind im Stand der Technik bekannt.

DE 601 28 790 T2 betrifft ein Verfahren und eine Vorrichtung zur Herstellung von fullerenartigen $WS_2$-Nanopartikeln und -Nanoröhren aus Wolframoxid und Reaktionsgasen, wobei in einem Chemiereaktor ein Reaktionsweg mit vorbestimmten Temperaturbedingungen eingerichtet, ein Gemisch aus einem Wolframoxid-Reaktionspulver und einem Inertgas mit einer vorbestimmten Rate in den Chemiereaktor eingebracht, in einer kontinuierlichen Strömung des Gemischs und der Gase durch den Reaktorweg eine Feststoff-Gas-Reaktion zwischen den Reaktionsgasen und dem Wolframoxidpulver induziert und mit mindestens einer $WS_2$-Schicht überzogene $WO_{3-x}$-Cluster gebildet und anschließend zu nanostrukturiertem fullerenartigem Wolframsulfid umgesetzt und gesammelt werden. Die in der DE 601 28 790 T2 beschriebene Vorrichtung umfasst eine Einbringeinrichtung, einen Chemiereaktor und eine Temperatursteuereinrichtung, die es ermöglicht die Temperatur entlang des Reaktionsweges im Innern des Chemiereaktors zu regeln und im Wesentlichen konstant zu halten. Über eine Strömungsleitung wird in dem Chemiereaktor eine kontinuierliche Strömung eines Gemischs aus einem Metalloxid-Reaktionspulver und einem strömungsunterstützenden Inertgas aufrecht gehalten.

Die Schrift F. Xu, N. Wang, H. Chang, Y. Xia, Y. Zhu; Continuous Production of IF-WS2 Nanoparticles by a Rotary Process; Inorganics 2014, 2, 313-333 offenbart ein Verfahren und eine Vorrichtung zur Herstellung von fullerenartigen Nanopartikeln aus Wolframdisulfid. In dem Verfahren wird ein nanoskaliges Pulver aus $WO_3$ mittels eines Argongasstromes kontinuierlich in einen Drehrohrofen eingebracht und mit einem Reaktivgas, das aus einer Mischung von $H_2S$, $H_2$ und Ar besteht, bei einer Temperatur im Bereich von 800 bis 900 °C sulfidiert. Das nach dem Verfahren erzeugte Wolframsulfid besteht aus agglomerierten Nanopartikeln, wobei die Agglomerate eine Größe von einigen Mikrometern aufweisen. Die Nanopartikel sind hohl.

Die Schrift J. Li, T. Ma, L. Zhou, T. Zhang, Q. Zhu, H. Li; Synthesis of Fullerene-like WS2 Nanoparticles in a Particulately Fluidized Bed: Kinetics and Reaction Phase Diagram; Ind. Eng. Chem. Res. 2014, 53, 592-600 offenbart ein Verfahren zur Herstellung von fullerenartigen Nanopartikeln aus Wolframdisulfid, bei dem ein Fluidbett-Reaktor eingesetzt wird. Ab einer kritischen Konzentration von 4,3% des Reaktivgases $H_2S$ werden fullerenartige Nanopartikel gebildet, während bei geringerer Konzentration Nanostäbchen entstehen.

Bei einigen der im Stand der Technik bekannten Verfahren wird ein nanoskaliges Metalloxidpulver mittels eines Inertgases, wie $N_2$ fluidisiert und kontinuierlich in eine, ein Reaktivgas, wie $H_2S$ enthaltende Ofenkammer überführt. Der mit fluidisierter Zuführung erzielbare Massefluss an nanoskaligem Metalloxidpulver ist auf wenige g/min beschränkt. Zwar ist es möglich, mit erhöhtem Inertgasfluss den Massefluss des Metalloxidpulvers zu steigern. Der erhöhte Inertgasfluss kühlt und verdünnt das Reaktivgas in der Ofenkammer jedoch in erheblichem Maß. Hierdurch wird zum Einen die für das Verfahren essentielle erste Phase, in der das nanoskalige Metalloxidpulver reduziert und oberflächlich sulfidiert wird in unkontrollierter Weise beeinflusst und zum Anderen die zweite Phase der diffusionsbegrenzten Sulfidierung des nanoskaligen Metalloxids verlangsamt. Dementsprechend sind Verfahren der vorstehenden Art durch eine geringe Produktivität sowie Inhomogenität und mindere Qualität des erzeugten Produkts, d. h. des nanoskaligen Metallsulfids gekennzeichnet.

In einem anderen im Stand der Technik bekannten Verfahren werden 5 g eines nanoskaligen Metalloxidpulvers in eine Ofenkammer eingebracht, auf eine Temperatur von 400 bis 900 °C aufgeheizt und mittels eines Reaktivgases, insbesondere einer Mischung der Gase $H_2S$, $H_2$ und $N_2$ fluidisiert und sulfidiert. Der für die Fluidisierung von 5 g nanoskaligem Metalloxid benötigte Gasfluss beträgt 0,5 1/min. Fördereinrichtungen für die Beladung der Ofenkammer und die Entnahme des erzeugten Metallsulfids sind nicht vorgesehen. Die Ofenkammer muss nach Abschluss eines Sulfidierungsvorgangs geöffnet und zerlegt werden. Das Verfahren ist nicht in einem automatisierten kontinuierlichen Modus ausführbar. Dementsprechend ist die Produktivität bzw. der mit dem Verfahren erzielbare Durchsatz beschränkt.

Die Schrift CN 102849799 A offenbart eine Vorrichtung und ein Verfahren für die Herstellung von nanoskaligen Partikeln aus Wolframdisulfid ($WS_2$). Hierzu werden nanoskalige Partikel aus Wolframtrioxid ($WO_3$) kontinuierlich einem beheizten Fluidbett in einem Schachtofen zugeführt. Das Fluidbett wird mittels einer aufwärts gerichteten Gasströmung erzeugt. Das dem Schachtofen über eine Zuleitung zugeführte Prozessgas besteht aus einer Mischung von Schwefelwasserstoff ($H_2S$), Stickstoff ($N_2$) und Wasserstoff ($H_2$). Die Zuleitung für das Prozessgas ist mit einem am unteren Ende des Schachtofens angeordneten Einlass verbunden. Um in dem Prozessgas ein geeignetes Strömungsprofil zu erzeugen, ist der Einlass als poröse oder mit Löchern ausgestattete Verteilerplatte ausgebildet. Die in dem Fluidbett sulfidierten Nanopartikel werden kontinuierlich über eine oberhalb von dem Einlass angeordnete Abgasleitung aus dem Schachtofen entnommen. Die Vorrichtung der CN 102849799 A ist zudem mit einer Rezirkulationsschleife ausgestattet, die das obere Ende des Schachtofens mit der Zuleitung für Prozessgas verbindet. Die Rezirkulationsschleife umfasst einen Zyklon für die Abtrennung und Rückführung von Nanopartikeln, die durch die aufwärts gerichtete Gasströmung aus dem Fluidbett ausgetragen werden. Das Verfahren gemäß CN 102849799 A ist für die kontinuierliche Sulfidierung von nanoskaligen Partikeln aus Wolframtrioxid vorgesehen. Die Prozessdauer bzw. Sulfidierungszeit hängt maßgeblich von der Verweilzeit und der Position der Nanopartikel in dem Schachtofen ab. Aufgrund von Austrag (Ausschwemmung), Sedimentation und Sichtung im Fluidbett variiert die Prozessdauer (Sulfidierungszeit) einzelner Nanopartikel in unkontrollierter Weise um eine mittlere Prozessdauer $t_m$. Die mittlere Prozessdauer $t_m$ entspricht dem Quotienten aus der in dem Schachtofen und der Rezirkulationsschleife befindlichen Stoffmenge $s_0$ und der pro Zeiteinheit zugeführten Stoffmenge $\Delta s / \Delta t$ gemäß der Beziehung

$$ t_m = \frac{s_0}{\Delta s / \Delta t} $$

wobei die Stoffmengen $s_0$ und $\Delta s$ zweckmäßig in mol-Einheiten Wolfram angegeben sind und im kontinuierlichen Betrieb die dem Schachtofen pro Zeiteinheit zugeführte Stoffmenge gleich der pro Zeiteinheit entnommenen Stoffmenge ist. Das nach CN 102849799 A hergestellte Material enthält Nanopartikel, deren Prozessdauer erheblich kleiner oder größer als $t_m$ ist. Je nach Vorgabe der mittleren Prozessdauer $t_m$ enthält das Material unterstöchiometrisch sulfidierte Nanopartikel der Zusammensetzung $WO_xS_{2-y}$ mit x > 0,5 und 0,2 < y < 2 und/oder Nanopartikel, die aus Wolframdisulfid der strukturellen Modifikation $H-WS_2$ anstelle von $IF-WS_2$ bestehen.

WO 2001/066462 A2 betrifft eine Vorrichtung und ein Verfahren zur Herstellung von anorganischen Fulleren-ähnlichen Nanopartikeln und Nanoröhren (IF). Die Vorrichtung umfasst einen chemischen Reaktor und ist ferner mit einer Zufuhrvorrichtung und einer Temperatursteuereinrichtung zum Steuern der Temperatur entlang des Reaktionsweges innerhalb des Reaktors verbunden, um die Temperatur im Wesentlichen konstant zu halten. In dem Syntheseverfahren werden kugelförmige $IF-WO_3$-Nanopartikel mit einer Größe von bis zu 0.5 $\mu$m und Nanoröhren mit einer Länge bis zu mehreren hundert Mikrometern und einer Querschnittsabmessung von bis zu 200 nm erhalten.

CN 103 101 978 B beschreibt ein Verfahren und eine Vorrichtung zur Herstellung von nanoskaligem Wolframdisulfid $WS_2$ mit Fullerenstruktur in einem Fließbett- bzw. Wirbelschichtreaktor. Das zweistufige Verfahren umfasst die Schritte Reduktion und Schwefelung. Als Ausgangsmaterial wird Wolframtrioxid WO3 mit poröser Partikelmorphologie verwendet, die bei der Reduktion eine gleichmäßig dispergierte Fluidisierung der Nanopartikel gewährleistet.

Die im Stand der Technik bekannten Verfahren und die damit hergestellten Materialien weisen einen oder mehrere der folgenden Nachteile auf:

- niedrige Produktivität von kleiner 5 g/h;

- Chargengröße von kleiner 100 g;

- beträchtliche Anteile von Nanopartikeln einer unerwünschten Phase und/oder unterstöchiometrisch sulfidierte Nanopartikel,

- Nanopartikel mit variierendem Sauerstoffgehalt innerhalb einer Charge.

Die Erfindung hat die Aufgabe, ein Verfahren zur Herstellung von nanoskaligen Metallsulfiden bereit zu stellen, das die vorstehenden Nachteile überwindet.

Diese Aufgabe wird gelöst durch ein Verfahren, umfassend die Schritte:

(a) Bereitstellen von Nanopartikeln aus einem Metall oder Metalloxid in einem mit einer Zuführeinrichtung ausgerüsteten Vorlagebehälter;

(b) kontinuierliches Zuführen und Fluidisieren der Nanopartikel in einem Strom aus einem ersten Prozessgas, bestehend aus 10 bis 25 Vol.-% $H_2$, 75 bis 90 Vol.-% $H_2S$ und 0 bis 15 Vol.-% eines Inertgases, gewählt aus $N_2$, Ar oder einer Mischung davon, wobei die Nanopartikel während einer Dauer von 30 bis 300 s bei einer Temperatur von 600 bis 900 °C in dem ersten Prozessgas fluidisiert sind;

(c) Ablegen der Nanopartikel auf einer Oberfläche eines Schüttbetts aus Nanopartikeln in einer Ofenkammer, wobei ein zweites Prozessgas aus 10 bis 25 Vol.-% $H_2$, 75 bis 90 Vol.-% $H_2S$ und 0 bis 15 Vol.-% eines Inertgases, gewählt aus $N_2$, Ar oder einer Mischung davon, oberhalb des Schüttbetts in die Ofenkammer geleitet und verbrauchtes Prozessgas in einem unteren Bereich des Schüttbetts aus der Ofenkammer abgeführt wird;

(d) Sulfidieren der in dem Schüttbett in der Ofenkammer vorliegenden Nanopartikel bei einer Temperatur von 600 bis 900 °C während einer Dauer von 30 bis 200 min; und

(e) kontinuierliches Abführen von Nanopartikeln aus der Ofenkammer in einem unteren Bereich des Schüttbetts.

Zweckmäßige Ausführungsformen des erfindungsgemäßen Verfahrens sind dadurch gekennzeichnet, dass:

- die Schritte (a), (b), (c), (d), (e) nacheinander in sequentieller Reihenfolge ausgeführt werden;

- die in Schritt (b) dem fluidisierenden Gasstrom im Mittel pro Zeiteinheit zugeführte molare Menge an Metall und die in Schritt (e) im Mittel pro Zeiteinheit aus der Ofenkammer abgeführte molare Menge an Metall gleich groß sind;

- in Schritt (b) die Nanopartikel während einer Dauer von 30 bis 120 s fluidisiert sind;

- die Strömungsgeschwindigkeit des in Schritt (b) zur Fluidisierung der Nanopartikel eingesetzten Gasstromes 0,02 bis 3 cm/s beträgt;

- die Strömungsgeschwindigkeit des in Schritt (b) zur Fluidisierung der Nanopartikel eingesetzten Gasstromes 0,02 bis 0,2 cm/s, 0,02 bis 0,4 cm/s, 0,02 bis 0,6 cm/s, 0,02 bis 0,8 cm/s, 0,02 bis 1,0 cm/s, 0,5 bis 1,5 cm/s, 1,0 bis 2,0 cm/s, 1,5 bis 2,5 cm/s oder 2,0 bis 3,0 cm/s beträgt;

- die Nanopartikel in Schritt (b) in dem fluidisierenden Gasstrom über eine Strecke mit einer Länge von 0,2 bis 10 m transportiert werden;

- die Nanopartikel in Schritt (b) in dem fluidisierenden Gasstrom über eine Strecke mit einer Länge von 0,2 bis 0,5 m, 0,2 bis 1,0 m, 0,2 bis 1,5 m, 0,5 bis 2,0 m, 1,0 bis 3,0 m, 2,0 bis 4,0 m, 3,0 bis 7,0 m oder 5,0 bis 10,0 m transportiert werden;

- die Nanopartikel in Schritt (b) in dem fluidisierenden Gasstrom über eine wendelförmige Strecke transportiert werden;

- das erste Prozessgas aus 10 bis 25 Vol.-% $H_2$ und 75 bis 90 Vol.-% $H_2S$ besteht;

- der fluidisierende Gasstrom ein Druckgefälle aufweist und der Gasdruck in der Ofenkammer gegenüber dem maximalen Druck des fluidisierenden Gasstroms erniedrigt ist;

- der fluidisierende Gasstrom ein Druckgefälle aufweist und der Gasdruck in der Ofenkammer gegenüber dem maximalen Druck des fluidisierenden Gasstroms erniedrigt ist um einen Differenzdruck von 0,5 bis 500 mbar;

- der fluidisierende Gasstrom ein Druckgefälle aufweist und der Gasdruck in der Ofenkammer gegenüber dem maximalen Druck des fluidisierenden Gasstroms erniedrigt ist um einen Differenzdruck von 0,5 bis 10 mbar, 0,5 bis 50 mbar, 0,5 bis 100 mbar, 10 bis 200 mbar, 100 bis 300 mbar oder 200 bis 500 mbar;

- das Metall gewählt ist aus Wolfram, Molybdän, Titan, Zinn, Zink, Bismut, Antimon, Eisen oder einer Mischung der vorstehenden Metalle;

- das Metalloxid gewählt ist aus Oxiden von Wolfram, Molybdän, Titan, Zinn, Zink, Bismut, Antimon, Eisen oder einer Mischung der vorstehenden Metalle;

- die Nanopartikel aus Metall oder Metalloxid einen äquivalenten Durchmesser von 10 bis 200 nm haben;

- die Nanopartikel aus Metall oder Metalloxid einen äquivalenten Durchmesser von 10 bis 150 nm haben;

- die Nanopartikel aus Metall oder Metalloxid einen äquivalenten Durchmesser von 10 bis 110 nm haben;

- in Schritt (b) dem fluidisierenden Gasstrom 3 mg bis 3000 g Nanopartikel pro Sekunde zugeführt werden;

- in Schritt (b) dem fluidisierenden Gasstrom 30 mg bis 300 g Nanopartikel pro Sekunde zugeführt werden;

- in Schritt (b) dem fluidisierenden Gasstrom 30 mg bis 30 g Nanopartikel pro Sekunde zugeführt werden;

- die Nanopartikel in Schritt (b) bei einer Temperatur von 700 bis 850 °C fluidisiert werden;

- die Nanopartikel in Schritt (b) bei einer Temperatur von 780 bis 820 °C fluidisiert werden;

- die Nanopartikel in Schritt (d) bei einer Temperatur von 700 bis 850 °C sulfidiert werden;

- die Nanopartikel in Schritt (d) bei einer Temperatur von 780 bis 820 °C sulfidiert werden;

- das zweite Prozessgas aus 10 bis 25 Vol.-% $H_2$ und 75 bis 90 Vol.-% $H_2S$ besteht;

- die der Ofenkammer im Mittel pro Zeiteinheit zugeführte molare Menge an Wasserstoff (H) das 4- bis 8-fache der im Mittel pro Zeiteinheit zugeführten molaren Menge an Metall beträgt;

- die der Ofenkammer im Mittel pro Zeiteinheit zugeführte molare Menge an Wasserstoff (H) das 5- bis 7-fache der im Mittel pro Zeiteinheit zugeführten molaren Menge an Metall beträgt;

- die der Ofenkammer im Mittel pro Zeiteinheit zugeführte molare Menge an Wasserstoff (H) das 5,8- bis 6,2-fache der im Mittel pro Zeiteinheit zugeführten molaren Menge an Metall beträgt;

- die der Ofenkammer im Mittel pro Zeiteinheit zugeführte molare Menge an Schwefel (S) das 1,5- bis 3-fache der im Mittel pro Zeiteinheit zugeführten molaren Menge an Metall beträgt;

- die der Ofenkammer im Mittel pro Zeiteinheit zugeführte molare Menge an Schwefel (S) das 1,8- bis 2,2-fache der im Mittel pro Zeiteinheit zugeführten molaren Menge an Metall beträgt;

- das Schüttbett aus Nanopartikeln in einem quasistationären Zustand mit Massefluss gehalten wird;

- das Schüttbett aus Nanopartikeln mittels eines mit der Ofenkammer mechanisch oder fluidisch gekoppelten Schwingungsgenerators oder elektroakustischen Wandlers in Vibration versetzt wird, um in dem Schüttbett aus Nanopartikeln einen quasistationären Massefluss zu gewährleisten;

- in Schritt (b) die Standardabweichung der Verweilzeit der Nanopartikel in dem fluidisierenden Gasstrom, bezogen auf die mittlere Verweilzeit weniger als 20 %, vorzugsweise weniger als 15 % und insbesondere weniger als 10 % beträgt;

- in Schritt (d) die Standardabweichung der Verweilzeit der Nanopartikel in der Ofenkammer, bezogen auf die mittlere Verweilzeit weniger als 20 %, vorzugsweise weniger als 15 % und insbesondere weniger als 10 % beträgt;

- in Schritt (d) verbrauchtes Prozessgas in einem ersten Bereich und in Schritt (e) Nanopartikel in einem zweiten Bereich aus der Ofenkammer abgeführt werden, wobei der erste Bereich und der zweite Bereich räumlich voneinander getrennt angeordnet sind;

- in Schritt (b) die Nanopartikel in einer mit der Ofenkammer verbundenen Fluidisierungskammer fluidisiert werden und Prozessgas in der Fluidisierungskammer rezirkuliert wird;

- Prozessgas in der Ofenkammer rezirkuliert wird;

- in Schritt (b) die Nanopartikel in einer mit der Ofenkammer verbundenen Fluidisierungskammer fluidisiert werden und Prozessgas zwischen der Fluidisierungskammer und der Ofenkammer rezirkuliert wird; und/oder

- in Schritt (b) die Nanopartikel in einer mit der Ofenkammer verbundenen Fluidisierungskammer fluidisiert werden und mithilfe eines Gasantriebs Prozessgas aus der Ofenkammer in die Fluidisierungskammer geleitet wird.

Eine weitere Aufgabe der Erfindung besteht darin, ein für industrielle Anwendungen in der Katalyse, Tribologie und Photovoltaik geeignetes Material mit neuartigen Eigenschaften in quantitativen Mengen bereit zu stellen. Diese Aufgabe wird gelöst durch ein Material, bestehend aus 500 bis 100000 g Nanopartikeln aus Metallsulfid mit einem äquivalenten Durchmesser von 10 bis 200 nm, wobei das Material einen Sauerstoffgehalt von kleiner 5 Atom-% aufweist und die Nanopartikel im Mittel weniger als 5 Vol-% Hohlraum enthalten.

Vorteilhafte Ausführungsformen des erfindungsgemäßen Materials sind dadurch gekennzeichnet, dass:

- das Material aus Nanopartikeln aus Metallsulfid besteht, wobei die Summe des Metall- und Schwefelanteils 95 bis 99,9 Atom-% beträgt;

- das Material aus Nanopartikeln aus Wolframsulfid, aus Molybdänsulfid, aus Titansulfid, aus Zinnsulfid, aus Zinksulfid, aus Bismutsulfid, aus Antimonsulfid, aus Eisensulfid oder einer Mischung der vorstehenden Sulfide besteht;

- das Material aus Nanopartikeln aus Wolframdisulfid besteht;

- das Material aus Nanopartikeln aus fullerenartigem Wolframdisulfid (IF-WS$_2$) besteht;

- das Material aus Nanopartikeln aus Wolframdisulfid besteht, wobei der Wolframanteil 32,7 bis 33,3 Atom-% und der Schwefelanteil 63,3 bis 66,6 Atom-% beträgt;

- das Material aus Nanopartikeln aus fullerenartigem Wolframdisulfid (IF-WS$_2$) besteht, wobei der Wolframanteil 32,7 bis 33,3 Atom-% und der Schwefelanteil 63,3 bis 66,6 Atom-% beträgt;

- das Material einen Sauerstoffgehalt von kleiner 3 Atom-% aufweist; und/oder

- die Nanopartikel im Mittel weniger als 3 Vol-% Hohlraum enthalten.

Eine weitere Aufgabe der Erfindung besteht darin, eine Vorrichtung zur Herstellung von nanoskaligen Metallsulfiden bereit zu stellen. Diese Aufgabe wird gelöst durch eine Vorrichtung, umfassend

- einen Vorlagebehälter für Nanopartikel aus Metall oder Metalloxid;

- eine Fluidisierungskammer mit einer Heizung, die dafür eingerichtet ist, die Wandung der Fluidisierungskammer teilweise oder vollständig auf eine Temperatur von 600 bis 1200 °C aufzuheizen;

- eine Zufuhreinrichtung, die für die kontinuierliche Übertragung von Nanopartikeln aus dem Vorlagebehälter in die Fluidisierungskammer eingerichtet ist;

- eine mit der Fluidisierungskammer verbundene Ofenkammer mit einer Heizung, die dafür eingerichtet ist, die Wandung der Ofenkammer teilweise oder vollständig auf eine Temperatur von 600 bis 1200 °C aufzuheizen;

- mindestens eine mit der Fluidisierungskammer und mit der Ofenkammer verbundene Gasversorgungseinheit, die dafür eingerichtet ist, die Fluidisierungskammer mit einem ersten Prozessgas und die Ofenkammer mit einem zweiten Prozessgas zu versorgen, wobei

  - das erste Prozessgas aus 10 bis 25 Vol.-% H$_2$, 75 bis 90 Vol.-% H$_2$S und 0 bis 15 Vol.-% eines Inertgases, gewählt aus N$_2$, Ar oder einer Mischung davon besteht;

  - das zweite Prozessgas aus 10 bis 25 Vol.-% H$_2$, 75 bis 90 Vol.-% H$_2$S und 0 bis 15 Vol.-% eines Inertgases, gewählt aus N$_2$, Ar oder einer Mischung davon besteht; und

- mindestens eine in einem unteren Bereich der Ofenkammer angeordnete Ableitung für verbrauchtes Prozessgas; und

- mindestens eine in einem unteren Bereich der Ofenkammer angeordnete Abführeinrichtung, die für die kontinuierliche Entnahme von Nanopartikeln aus der Ofenkammer eingerichtet ist.

Zweckmäßige Ausführungsformen der erfindungsgemäßen Vorrichtung sind dadurch gekennzeichnet, dass

- die Fluidisierungskammer als Rohrleitung ausgebildet ist und eine Länge von 0,2 bis 10m hat;

- die Fluidisierungskammer als Rohrleitung ausgebildet ist und eine Länge von 0,2 bis 0,5 m, 0,2 bis 1,0 m, 0,2 bis 1,5 m, 0,5 bis 2,0 m, 1,0 bis 3,0 m, 2,0 bis 4,0 m, 3,0 bis 7,0 m oder 5,0 bis 10,0 m hat;

- die Fluidisierungskammer als Rohrleitung ausgebildet ist und einen Innendurchmesser von 2 bis 50 mm hat;

- die Fluidisierungskammer als Rohrleitung ausgebildet ist und einen Innendurchmesser von 2 bis 20 mm hat;

- die Fluidisierungskammer als Rohrleitung ausgebildet ist und einen Innendurchmesser von 2 bis 10 mm hat;

- die Fluidisierungskammer teilweise oder vollständig als wendelförmige Rohrleitung ausgebildet ist;

- die Ofenkammer oder die Ableitung mit einer gaspermeablen Membran aus einem temperaturbeständigen Werkstoff, wie Keramik oder Metall ausgerüstet ist;

- die Ableitung für verbrauchtes Prozessgas mit einem Gasantrieb, vorzugsweise mit einem Schaufelrad, einem Rotor oder einer Turbine ausgerüstet ist;

- die Ableitung für verbrauchtes Prozessgas mit einem Gasantrieb, vorzugsweise mit einem Schaufelrad, einem Rotor oder einer Turbine ausgerüstet ist, welcher dafür eingerichtet ist, in der Ofenkammer einen gegenüber der Fluidisierungskammer erniedrigten Gasdruck zu erzeugen;

- die Vorrichtung einen Gaswäscher und/oder einen Gasfilter umfasst, der über die Ableitung mit der Ofenkammer verbunden ist;

- die Vorrichtung mindestens einen Füllstandsensor für die Messung der Höhe eines Schüttbetts in der Ofenkammer umfasst;

- der Füllstandsensor als optischer Sensor ausgebildet ist;

- der Füllstandsensor als Lichtschranke ausgebildet ist;

- der Füllstandsensor als Lichtschranke ausgebildet ist und eine Lichtquelle, wie beispielsweise eine Licht-emittierende Diode (LED) und einen Lichtsensor, wie beispielsweise eine Photodiode umfasst;

- der Füllstandsensor als akustischer Sensor ausgebildet ist;

- der Füllstandsensor als induktiver oder kapazitiver Sensor ausgebildet ist;

- die Zuführeinrichtung mit einer Förderschnecke ausgerüstet ist;

- die Zuführeinrichtung mit einer Zellradschleuse ausgerüstet ist;

- die Zuführeinrichtung einen oder mehrere elektrische Antriebe für die Förderschnecke und/oder die Zellradschleuse umfasst;

- die Abführeinrichtung mit einer Förderschnecke ausgerüstet ist;

- die Abführeinrichtung mit einer Zellradschleuse ausgerüstet ist;

- die Abführeinrichtung einen oder mehrere elektrische Antriebe für die Förderschnecke und/oder die Zellradschleuse umfasst;

- die Gasversorgungseinheit mit ein, zwei oder mehr Ventilen oder Massenflussreglern für die Regelung des Massenflusses des ersten und zweiten Prozessgases ausgerüstet ist;

- die Vorrichtung mindestens einen Temperatursensor für die Messung und Regelung der Temperatur der Fluidisierungskammer umfasst;

- die Vorrichtung mindestens einen Temperatursensor für die Messung und Regelung der Temperatur der Ofenkammer umfasst;

- die Vorrichtung eine elektronische Steuerung umfasst;

- die Heizung der Fluidisierungskammer mit der elektronischen Steuerung verbunden ist;

- die Heizung der Ofenkammer mit der elektronischen Steuerung verbunden ist;

- der Füllstandsensor mit der elektronischen Steuerung verbunden ist;

- die Zuführeinrichtung mit der elektronischen Steuerung verbunden ist;

- die Abführeinrichtung mit der elektronischen Steuerung verbunden ist;

- die Gasversorgungseinheit mit der elektronischen Steuerung verbunden ist;

- der mindestens eine Temperatursensor für die Messung und Regelung der Temperatur der Fluidisierungskammer mit der elektronischen Steuerung verbunden ist;

- der mindestens eine Temperatursensor für die Messung und Regelung der Temperatur der Ofenkammer mit der elektronischen Steuerung verbunden ist;

- die Ofenkammer derart ausgebildet ist, dass ein in der Ofenkammer gelagertes Schüttbett aus Nanopartikeln der Bedingung für Massefluss unterliegt;

- die Ofenkammer teilweise oder vollständig als keilförmiger Trichter ausgebildet ist, wobei der keilförmige Trichter eine Grundfläche mit Länge L und Breite B und einen Öffnungswinkel $2\theta$ von 20 bis 60 Grad, vorzugsweise 20 bis 55 Grad und insbesondere 30 bis 50 Grad aufweist;

- die Ofenkammer teilweise oder vollständig als keilförmiger Trichter ausgebildet ist, der keilförmige Trichter eine Grundfläche mit Länge L und Breite B und eine untere Öffnung aufweist, wobei ein minimaler Durchmesser d der unteren Öffnung die Bedingung $d \geq 0,1 \cdot B$ oder $d \geq 0,1 \cdot L$, vorzugsweise $d \geq 0,15 \cdot B$ oder $d \geq 0,15 \cdot L$ und insbesondere $d \geq 0,2 \cdot B$ oder $d \geq 0,2 \cdot L$ erfüllt;

- die Ofenkammer einen quaderförmigen Teil umfasst mit Länge L, Breite B und Höhe H, wobei $H \geq 0,75 \cdot B$ oder $H \geq 0,75 \cdot L$ ist;

- die Ofenkammer teilweise oder vollständig als konusförmiger Trichter ausgebildet ist, wobei der konusförmige Trichter eine kreisförmige Grundfläche mit Durchmesser D und einen Öffnungswinkel $2\theta$ von 20 bis 60 Grad, vorzugsweise 20 bis 55 Grad und insbesondere 30 bis 50 Grad aufweist;

- die Ofenkammer teilweise oder vollständig als konusförmiger Trichter ausgebildet ist, der konusförmige Trichter eine kreisförmige Grundfläche mit Durchmesser D und eine untere Öffnung aufweist, wobei ein minimaler Durchmesser d der unteren Öffnung die Bedingung $d \geq 0,1 \cdot D$, vorzugsweise $d \geq 0,15 \cdot D$ und insbesondere $d \geq 0,2 \cdot D$ erfüllt;

- die Ofenkammer einen zylindrischen Teil umfasst mit Höhe H und Durchmesser D, wobei $H \geq 0,75 \cdot D$ gilt;

- die Ofenkammer teilweise oder vollständig als polygonaler Trichter ausgebildet ist, wobei der polygonale Trichter drei oder mehr Wände mit einem Neigungswinkel $\theta$ von 10 bis 30 Grad, vorzugsweise 10 bis 28 Grad und insbesondere 15 bis 25 Grad, bezogen auf eine zur Grundfläche des Trichters senkrechte Richtung, umfasst;

- die Ofenkammer teilweise oder vollständig als polygonaler Trichter ausgebildet ist, der polygonale Trichter eine polygonale Grundfläche und eine untere Öffnung aufweist, wobei ein minimaler Durchmesser d der unteren Öffnung die Bedingung $d \geq 0,1 \cdot D$, vorzugsweise $d \geq 0,15 \cdot D$ und insbesondere $d \geq 0,2 \cdot D$ erfüllt und D dem Durchmesser eines zu der polygonalen Querschnittsfläche flächengleichen Kreises entspricht;

- die Ofenkammer einen prismenförmigen Teil umfasst mit einer polygonalen Querschnittsfläche und einer Höhe H, wobei die Höhe H die Bedingung H ≥ 0,75·D erfüllt und D dem Durchmesser eines zu der polygonalen Querschnittsfläche flächengleichen Kreises entspricht;

- die Fluidisierungskammer aus einem temperaturbeständigen Werkstoff, insbesondere aus Quarzglas oder Keramik besteht;

- die Ofenkammerkammer aus einem temperaturbeständigen Werkstoff, insbesondere aus Quarzglas oder Keramik besteht;

- die Vorrichtung mit einem Schwingungsgenerator ausgerüstet ist und der Schwingungsgenerator mechanisch mit der Ofenkammer gekoppelt ist;

- die Vorrichtung mit einem elektroakustischen Wandler ausgerüstet ist, wobei der elektroakustische Wandler mechanisch oder fluidisch mit der Ofenkammer gekoppelt ist;

- die Vorrichtung mit einem elektroakustischen Wandler ausgerüstet ist, wobei der elektroakustische Wandler über das zweite Prozessgas mit dem Innenraum der Ofenkammer gekoppelt ist;

- die Vorrichtung mindestens eine Rezirkulationsleitung umfasst, die einen unteren Bereich der Fluidisierungskammer mit einem oberen Bereich der Fluidisierungskammer verbindet;

- die Vorrichtung mindestens eine Rezirkulationsleitung umfasst, die einen unteren Bereich der Ofenkammer mit einem oberen Bereich der Ofenkammer verbindet;

- die Vorrichtung mindestens eine Rezirkulationsleitung umfasst, welche die Fluidisierungskammer mit der Ofenkammer verbindet; und/oder

- die mindestens eine Rezirkulationsleitung mit einem Gasantrieb, vorzugsweise mit einem Schaufelrad, einem Rotor oder einer Turbine ausgerüstet ist.

Die Erfindung wird nachfolgend anhand von Figuren näher erläutert. Es zeigen:

Fig. 1    ein Blockdiagramm einer Vorrichtung für die Herstellung von nanoskaligen Metallsulfiden;

Fig. 2    eine perspektivische Ansicht der wesentlichen Komponenten einer Vorrichtung für die Herstellung von nanoskaligen Metallsulfiden;

Fig. 3    eine schematische Schnittansicht einer trichterförmig ausgestalteten Ofenkammer für die Sulfidierung von nanoskaligen Metallen oder Metalloxiden;

Fig. 4    perspektivische Teilansichten trichterförmig ausgestalteter Ofenkammern; und

Fig. 5    eine schematische Darstellung von transmissionselektronenmikroskopischen Bildern von Nanopartikeln mit Hohlräumen.

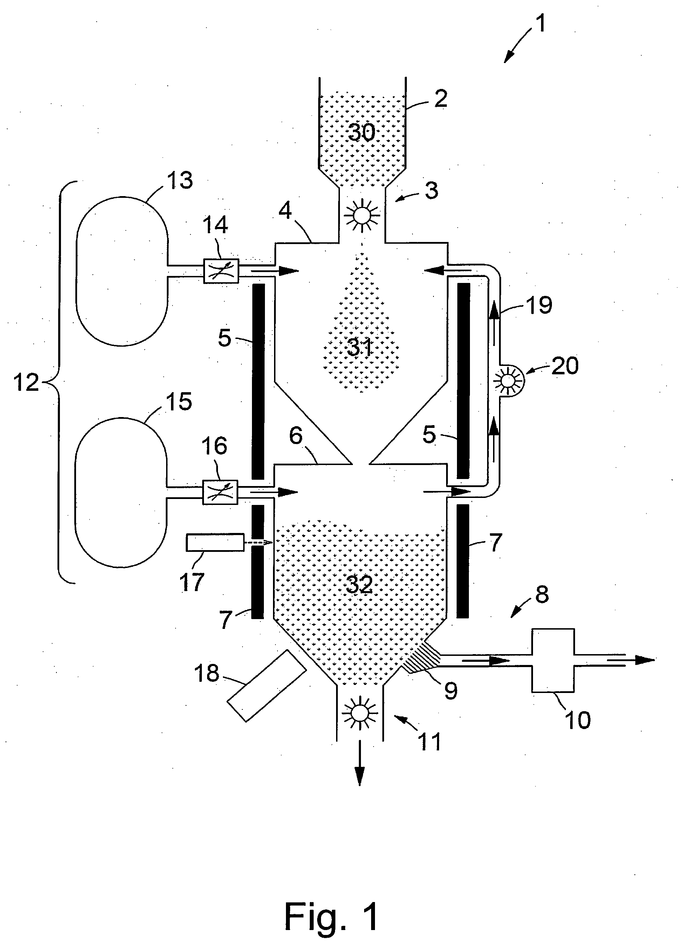

Fig. 1 zeigt ein Blockschema einer erfindungsgemäßen Vorrichtung 1 für die Herstellung von nanoskaligen Metallsulfiden. Ein Vorlagebehälter 2 enthält ein Pulver aus nanoskaligen Partikeln 30 aus Metall oder Metalloxid. Über eine Zuführeinrichtung 3 werden die nanoskaligen Partikel 30 mit einer vorgegebenen Förderrate (mg/min) in eine mittels einer Heizung 5 beheizte Fluidisierungskammer 4 eingebracht. Die Zuführeinrichtung 3 umfasst eine Förderschnecke und/oder eine Zellradschleuse, die von einem oder mehreren regelbaren Elektromotoren angetrieben werden. Die Fluidisierungskammer 4 ist mit einer Gasversorgungseinheit 12 verbunden. Von der Gasversorgungseinheit 12 wird der Fluidisierungskammer 4 ein erstes Prozessgas mit vorgegebener Flussrate ($cm^3$/min) zugeführt. Das erste Prozessgas besteht aus 10 bis 25 Vol.-% $H_2$, 75 bis 90 Vol.-% $H_2S$ und 0 bis 15 Vol.-% eines Inertgases, gewählt aus $N_2$, Ar oder einer Mischung davon und dient dazu, die in die Fluidisierungskammer 4 eingebrachten Nanopartikel 31 zu fluidisieren und auf der Oberfläche der Nanopartikel 31 eine Schicht aus Metallsulfid zu erzeugen. Mittels der elektrisch betriebenen Heizung 5 wird die Wandung der Fluidisierungskammer 4 auf einer Temperatur von 600 bis 1200 °C gehalten. Die Heizung 5 ist vorzugsweise als ein aus Graphit oder Carbonfaser-verstärktem Graphit (carbon fiber carbon composite bzw. CFC) bestehendes Flächenheizelement ausgebildet. Die Fluidisierungskammer 4 ist mit einer mittels einer Heizung 7 beheizten Ofenkammer 6 verbunden. Die Ofenkammer 6 ist unterhalb der Fluidisierungskammer 4 angeordnet. Das erste Prozessgas und die darin fluidisierten Nanopartikel 31 strömen von der Fluidisierungskammer 4 in die Ofenkammer 6 und werden auf einer Oberfläche eines losen Schüttbetts aus Nanopartikeln 32 abgeschieden. Mittels der elektrisch betriebenen Heizung 7 wird die Wandung eines oberen Bereichs der Ofenkammer 6 auf einer Temperatur von 600 bis 1200 °C gehalten. Die Heizung 7 ist vorzugsweise als ein aus Graphit oder Carbonfaser-verstärktem Graphit (carbon fiber carbon composite bzw. CFC) bestehendes Flächenheizelement ausgebildet. Die Ofenkammer 6 ist mit der Gasversorgungseinheit 12 verbunden. Von der Gasversorgungseinheit 12 wird der Ofenkammer 6 ein zweites Prozessgas mit vorgegebener Flussrate ($cm^3$/min) zugeführt. Das zweite Prozessgas besteht aus 10 bis 25 Vol.-% $H_2$, 75 bis 90 Vol.-% $H_2S$ und 0 bis 15 Vol.-% eines Inertgases, gewählt aus $N_2$, Ar oder einer Mischung davon und dient dazu, die in dem Schüttbett enthaltenen Nanopartikel 32 zu sulfidieren.

Die Gasversorgungseinheit 12 umfasst zwei oder mehrere Gasbehälter (13, 15), die über regelbare Ventile oder Massenflussregler (14, 15) mit der Fluidisierungskammer 4 und/oder mit der Ofenkammer 6 verbunden sind. Die Gasbehälter (13, 15) enthalten das erste und zweite Prozessgas oder Gase, aus denen das erste und zweite Prozessgas zusammengesetzt sind, insbesondere Schwefelwasserstoff ($H_2S$), Wasserstoff ($H_2$) sowie gegebenenfalls ein oder mehrere Inertgase, wie Stickstoff (N2) und Argon (Ar).

In einem unteren Bereich der Ofenkammer 6 ist eine Ableitung 8 angeordnet. Über die Ableitung 8 wird verbrauchtes Prozessgas aus der Ofenkammer 6 abgeführt. Die Ableitung 8 oder die Wandung der Ofenkammer 6 ist mit einer gasdurchlässigen Membran 9 ausgerüstet. Die Membran 9 ist als poröse oder perforierte Platte ausgebildet und besteht aus einem temperaturbeständigen Werkstoff, wie Metall oder Keramik. Die Membran 9 weist Poren und/oder Löcher mit einem Durchmesser im Bereich von 50 bis 5000 nm auf und bildet eine gasdurchlässige mechanische Barriere, die den Austrag von Nanopartikeln 32 aus der Ofenkammer 6 verhindert. Vorzugsweise ist die Ableitung 8 mit einem Gasreinigungsmodul 10 verbunden. Das Gasreinigungsmodul 10 umfasst einen Gaswäscher und/oder einen Gasfilter, in denen Schwefelrückstände aus dem verbrauchten Prozessgas abgeschieden und zurückgehalten werden.

In einer zweckmäßigen Ausführungsform der erfindungsgemäßen Vorrichtung ist die Ableitung 8 mit einem, in Fig. 1 nicht gezeigten elektrisch angetriebenen Gasantrieb, insbesondere mit einem Schaufelrad, einem Rotor oder einer Turbine ausgerüstet. Der Gasantrieb bzw. das Schaufelrad, der Rotor oder die Turbine sind vorzugsweise aus einem hitzebeständigen Material, wie Keramik oder Metall gefertigt. Der in der Ableitung 8 angeordnete Gasantrieb ermöglicht es, in der Ofenkammer 6 einen gegenüber der Fluidisierungskammer 4 verminderten Gasdruck zu erzeugen.

Das der Ofenkammer 6 zugeführte erste und zweite Prozessgas strömt durch das Schüttbett aus Nanopartikeln 32, wobei die Nanopartikel 32 hochgradig, vorzugsweise stöchiometrisch vollständig sulfidiert werden. Die Heizung 7 ist derart gestaltet, dass die Wandung des unteren Bereichs der Ofenkammer 6 nicht oder nur in geringem Maß der von der Heizung 7 emittierten Wärmestrahlung ausgesetzt ist. Dementsprechend wird der untere Bereich der Ofenkammer 6 lediglich aufgrund von Wärmeleitung in dem Schüttbett aus Nanopartikeln 32 und durch heißes, zur Ableitung 8 strömendes Prozessgas geheizt.

In dem unteren Bereich der Ofenkammer 6 ist eine Abführeinrichtung 11 für sulfidierte Nanopartikel 32 angeordnet. Die Abführeinrichtung 11 umfasst eine Förderschnecke und/oder eine Zellradschleuse, die von einem oder mehreren regelbaren Elektromotoren angetrieben werden. Mittels der Abführeinrichtung 11 werden Nanopartikel 32 mit einer vorgegebenen Förderrate (mg/min) aus der Ofenkammer 6 abgeführt. Vorzugsweise ist die Abführeinrichtung 11 unterhalb der Mündung der Ableitung 8 für verbrauchtes Prozessgas angeordnet, so dass der Anteil an Prozessgas, der durch die Abführeinrichtung 11 aus der Ofenkammer 6 strömt, minimiert wird. Bevorzugt werden die Zuführeinrichtung 3 und die Abführeinrichtung 11 derart betrieben, dass die der Fluidisierungskammer 4 im Mittel pro Zeiteinheit zugeführte molare Menge an Metall und die im Mittel pro Zeiteinheit aus der Ofenkammer 6 abgeführte molare Menge an Metall gleich groß sind. Bevorzugt umfasst die Vorrichtung 1 einen Füllstandsensor 17, mit dem die Höhe des Schüttbetts aus Nanopartikeln 32 in der Ofenkammer 6 gemessen wird. Der Füllstandsensor 17 ist als optischer, akustischer, induktiver oder kapazitiver Sensor ausgebildet. Insbesondere ist der Füllstandsensor 17 als Lichtschranke ausgebildet. Zweckmäßig wird das Messsignal des Füllstandsensors 17 für die Regelung der Förderrate der Abführeinrichtung 11 und/oder 13 verwendet.

In einer vorteilhaften Ausführungsform der Erfindung ist der untere Bereich der Ofenkammer 6 trichterförmig ausgebildet. Die Abführeinrichtung 11 wird bevorzugt kontinuierlich betrieben, so dass das Schüttbett aus Nanopartikeln 32 ständig in Bewegung gehalten und die Agglomeration von Nanopartikeln 32 verhindert wird. Optional umfasst die Vorrichtung 1 einen Schwingungsgenerator oder elektroakustischen Wandler 18, der mit der Ofenkammer 6 mechanisch oder fluidisch gekoppelt ist und dazu dient, das Schüttbett aus Nanopartikeln 32 in Vibration zu versetzen und Agglomeration zu verhindern. Unter fluidischer Kopplung ist hierbei die Übertragung von Schwingungsenergie durch ein mit einem Gas oder einer Flüssigkeit gefülltes Volumen, wie beispielsweise ein Luftspalt zwischen dem Schwingungsgenerator oder elektroakustischen Wandler 18 und der Wandung der Öfenkammer 6 gemeint. Vorzugsweise ist der Schwingungsgenerator oder elektroakustische Wandler 18 als Lautsprecher mit einer Membran aus einem temperaturbeständigen Werkstoff, wie einer metallischen Folie, ausgebildet. Insbesondere kann der Schwingungsgenerator oder elektroakustische Wandler 18 direkt mit dem in der Ofenkammer 6 befindlichen Prozessgas gekoppelt sein. Hierzu ist die Wandung der Ofenkammer 6 mit einer Aussparung oder einem Stutzen ausgestattet, der mit einem Aktuator, insbesondere einer Membran des Schwingungsgenerators oder elektroakustischen Wandlers 18 gasdicht versiegelt ist.

In einer zweckmäßigen Ausführungsform der Erfindung umfasst die Vorrichtung 1 eine oder mehrere Rezirkulationsleitungen 19. Die mindestens eine Rezirkulationsleitung 19 verbindet wahlweise

- einen unteren Bereich der Fluidisierungskammer 4 mit einem oberen Bereich der Fluidisierungskammer 4;

- einen unteren Bereich der Ofenkammer 6 mit einem oberen Bereich der Ofenkammer 6; und/oder

- die Fluidisierungskammer 4 mit der Ofenkammer 6.

Zweckmäßig ist die mindestens eine Rezirkulationsleitung 19 mit einem regelbaren Gasantrieb 20 ausgerüstet. Der Gasantrieb 20 umfasst ein Schaufelrad, einen Rotor oder eine Turbine aus einem temperaturbeständigen Material, wie Keramik oder Metall. Das Schaufelrad, der Rotor oder die Turbine ist über eine gasdichte Drehdurchführung mit einem Elektromotor gekoppelt.

Die mindestens eine Rezirkulationsleitung 19 ermöglicht es, die Strömungsgeschwindigkeit des ersten und zweiten Prozessgases in der Fluidisierungskammer 4 und der Ofenkammer 6 unabhängig von den für stöchiometrische Sulfidierung erforderlichen Gasflussraten zu erhöhen.

In einer besonders vorteilhaften Ausführungsform der Erfindung ist die Vorrichtung 1 mit einer, in Fig. 1 nicht gezeigten, elektronischen Steuerung ausgestattet. Die elektronische Steuerung ist vorzugweise als speicherprogrammierbare Steuerung (SPS) oder als PC-basierte Softwaresteuerung beziehungsweise als Soft-SPS implementiert. Die Zuführeinrichtung 3, die Abführeinrichtung 11, die regelbaren Ventile oder Massenflussregler (14,16), Spannungsversorgungen der elektrischen Heizungen (5, 7), Temperatursensoren für die Messung der Temperatur der Fluidisierungskammer 4 und der Ofenkammer 6, der Füllstandsensor 17 sowie ggf. ein oder mehrere Gasantriebe 20 in einer oder mehreren Rezirkulationsleitungen 19 und/oder ein in der Ableitung 8 angeordneter Gasantrieb sind jeweils mit einem Ausgang oder einem Eingang der elektronischen Steuerung verbunden. Dementsprechend kann die Vorrichtung 1 mittels eines in der elektronischen Steuerung hinterlegten Programms in einem automatisierten Modus betrieben werden.

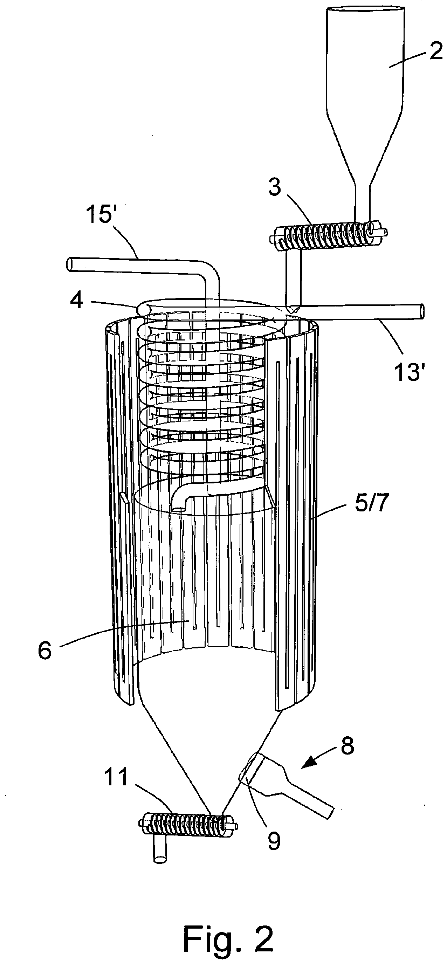

Fig. 2 zeigt eine perspektivische Teilansicht der wesentlichen Komponenten einer erfindungsgemäßen Vorrichtung mit einem Vorlagebehälter 2, einer als Förderschnecke ausgebildeten Zuführeinrichtung 3, einer als wendelförmiges Rohr gestalteten Fluidisierungskammer 4, die in eine Ofenkammer 6 mündet und einer ebenfalls als Förderschnecke ausgebildeten Abführeinrichtung 11. Über Zuleitungen 13' und 15' werden von einer in Fig. 2 nicht gezeigten Gasversorgungseinheit ein erstes, respektive zweites Prozessgas in die Fluidisierungskammer 4, respektive die Ofenkammer 6 geleitet. Die Fluidisierungskammer 4 und die Ofenkammer 6 sind aus einem temperaturbeständigen Werkstoff, wie Quarzglas, Keramik oder Metall gefertigt und werden mittels einer in partieller Schnittansicht dargestellten Heizung 5/7 beheizt. Die Heizung 5/7 ist als Flachheizelement mit zylindrischer Kontur ausgebildet und umfasst ein oder mehrere Widerstandssegmente mit mäanderförmigem Verlauf. In einem unteren Bereich ist die Ofenkammer 6 mit einer Ableitung 8 für verbrauchtes Prozessgas verbunden. In der Ableitung 8 oder in der Wandung der Ofenkammer 6 ist eine gasdurchlässige Membran 9 aus einem temperaturbeständigen Werkstoff, wie Keramik oder Metall angeordnet. Die Membran 9 verhindert den Austrag von Nanopartikeln über die Ableitung 8. Der untere Bereich der Ofenkammer 6 ist trichterförmig gestaltet. Die zylindrische Heizung 5/7 ist derart dimensioniert, dass der untere trichterförmige Bereich der Ofenkammer 6 nicht der direkt von der Heizung 5/7 emittierte Wärmestrahlung ausgesetzt ist. Dementsprechend haben in dem unteren trichterförmigen Bereich der Ofenkammer 6 befindliche Nanopartikel eine Temperatur die wesentlich niedriger ist als die Temperatur von Nanopartikeln in dem oberen beheizten Bereich der Ofenkammer 6.

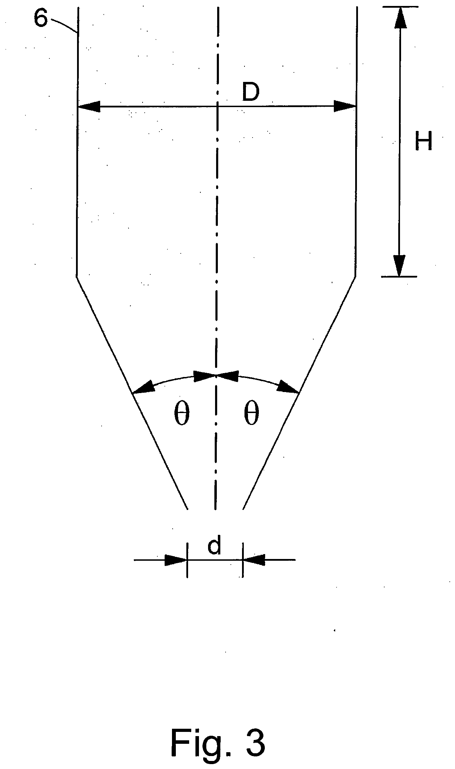

Fig. 3 zeigt eine schematische Schnittansicht einer erfindungsgemäßen Ofenkammer 6 mit einem oberen Bereich mit rechteckigem Querschnitt und einem unteren Bereich mit trichterförmigem Querschnitt. Die Weite (Durchmesser) und die Höhe des oberen Bereichs der Ofenkammer 6 sind mit den Bezugszeichen D, respektive H bezeichnet. Der trichterförmige Bereich hat einen Öffnungswinkel $2\theta$ im Bereich von 20 bis 60 Grad, vorzugsweise 20 bis 55 Grad und insbesondere 30 bis 50 Grad. Im Rahmen der vorliegenden Erfindung bezeichnet $\theta$ allgemein einen von einer vertikalen Richtung und einer Seitenwand des trichterförmigen Bereichs begrenzten Winkel. Der trichterförmige Bereich der Ofenkammer 6 weist am unteren Ende eine Öffnung mit Weite bzw. Durchmesser d auf. Der Winkel $\theta$ und die Weite d der unteren Trichteröffnung sind derart gewählt, dass ein in der Ofenkammer 6 befindliches Schüttbett aus Nanopartikeln der Bedingung für Massefluss unterliegt und die Nanopartikel ohne Verblockung aus der Ofenkammer 6 abgeführt werden können.

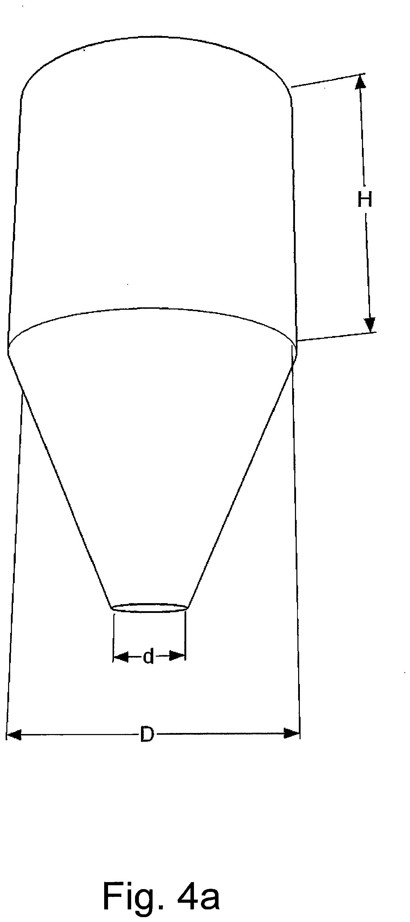

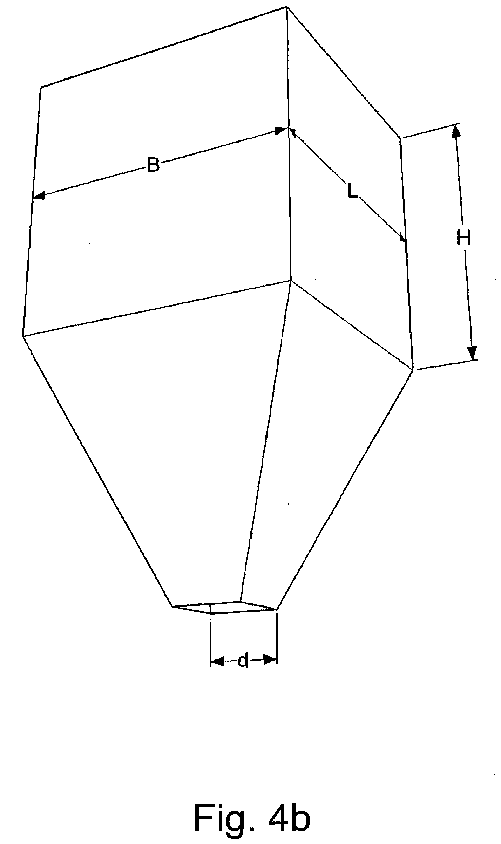

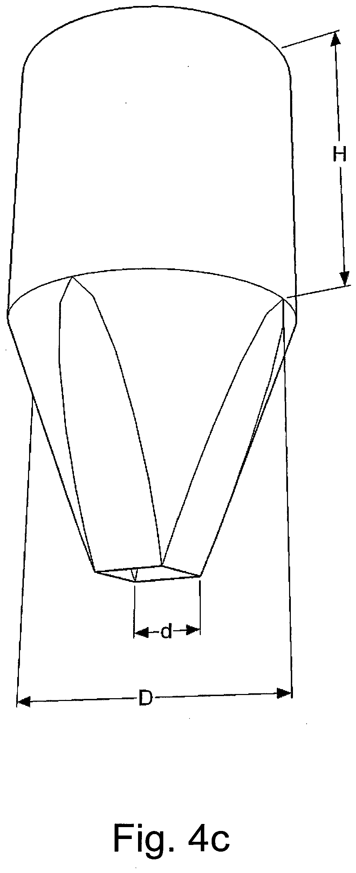

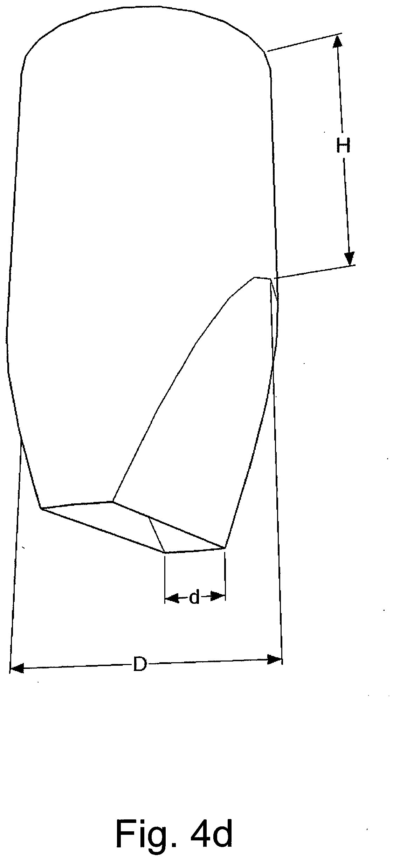

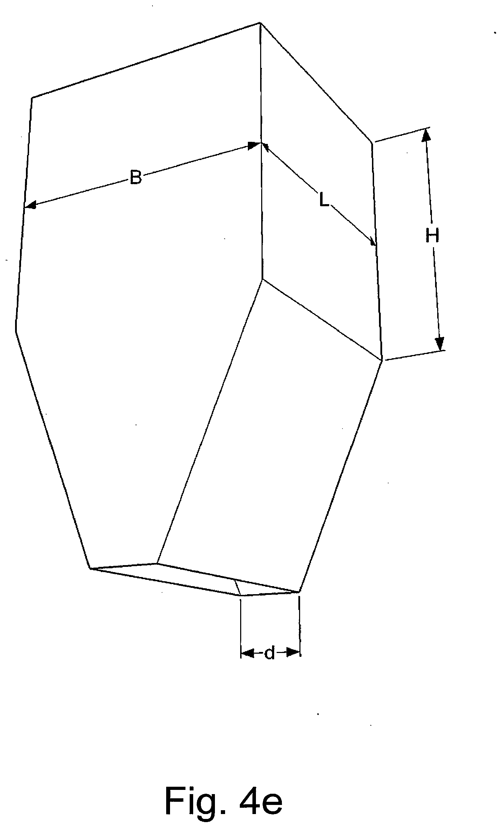

Die Figuren 4a, 4b, 4c, 4d, 4e zeigen in perspektivischer Ansicht die Geometrie erfindungsgemäßer Ofenkammern mit einem trichterförmigen unteren Bereich. Der obere Bereich der in den Figuren 4a, 4c, 4d gezeigten Ofenkammern hat die Gestalt eines Zylinders mit Durchmesser D und Höhe H. Demgegenüber hat der obere Bereich der in den Figuren 4b, 4e gezeigten Ofenkammern eine quaderförmige Gestalt mit Breite B, Länge L und Höhe H. Der trichterförmige Bereich jeder der in den Figuren 4a, 4b, 4c, 4d, 4e gezeigten Ofenkammern weist am unteren Ende eine Öffnung auf, wobei der kleinste lotrechte Abstand zwischen zwei gegenüberliegenden Begrenzungskanten der Öffnung - im Rahmen der vorliegenden Erfindung synonym als minimaler Durchmesser bezeichnet - durch das Bezugszeichen b gekennzeichnet ist.

Im Rahmen der vorliegenden Erfindung bezeichnet der Begriff "äquivalenter Durchmesser" eines Nanopartikels den Durchmesser einer Kugel, die das gleiche Volumen wie das Nanopartikel hat. Die Abmessungen und Volumina der Nanopartikel werden erfindungsgemäß mittels eines Rasterelektronenmikroskops oder eines Transmissionselektronenmikroskops und einer Bildanalysesoftware, wie beispielsweise ImageJ (http://imagej.nih.gov/ij) bestimmt. Hierbei werden anhand digitalisierter rasterelektronenmikroskopischer Aufnahmen mindestens 100, vorzugsweise mindestens 1000 Nanopartikel mithilfe der Bildanalysesoftware digital vermessen. Aufgrund der hohen lateralen Auflösung von Transmissionselektronenmikroskopen und Rasterelektronenmikroskopen des Standes der Technik, die je nach Einstellung der Elektronenoptik und der Strahlparameter im Bereich von einigen Ångström bis zu 10 nm liegt, kann der äquivalente Durchmesser der Nanopartikel mit hoher Zuverlässigkeit ermittelt werden.

Zur Bestimmung der äquivalenten Durchmesser der Nanopartikel wird nanoskaliges Metallsulfid in vollentsalztem Wasser in einer Konzentration von etwa 0,5 mg/ml mittels Ultraschall suspendiert und ein Tropfen dieser Suspension, d. h. etwa 40 $\mu$l auf ein planes, vorzugsweise kreisförmiges Glasplättchen mit einer Fläche von etwa 1 cm$^2$ aufgeschleudert. Das mit der Suspension beschichtete Glasplättchen wird etwa 30 min lang in horizontaler Lage unter Reinraumbedingungen gelagert, bis das Wasser verdunstet ist und anschließend mit einem etwa 10 nm dicken Film aus Kohlenstoff beschichtet und in das Rasterelektronenmikroskop transferiert. Die vorstehend beschriebene Probenpräparation gewährleistet, dass benachbarte Nanopartikel auf dem Glasplättchen hinreichend weit voneinander beabstandet sind und im Rasterelektronenmikroskop als getrennte Objekte abgebildet werden.

Softwaregestützte Verfahren zur Auswertung von mittels Transmissionselektronenmikroskop oder Rasterelektronenmikroskop aufgezeichneten digitalen Bilder von Nanopartikeln sind im Stand der Technik bekannt und umfassen die folgenden Schritte:

- algorithmische Erstellung eines Grauwerthistogramms;

- interaktive Festlegung eines geeigneten Schwellwertes im Grauwerthistogramm, um jedes Bildpixel als zum Hintergrund oder zu einem Nanopartikel gehörig zu klassifizieren, je nachdem ob der Grauwert des Bildpixels oberhalb oder unterhalb des Schwellwertes liegt;

- algorithmisches Binarisieren des Bildes, d. h. Wandlung des Grauwertbildes in ein Schwarz-Weiß-Bild;

- gegebenenfalls algorithmische binäre Dilatation und Erosion (Closing), um Lücken zu schließen oder binäre Erosion und Dilatation (Opening), um durch Bildrauschen verursachte Artefakte, wie Pseudopartikel mit einer Größe von unter 5nm zu eliminieren; und

- algorithmische Identifikation von zusammenhängenden Flächen aus benachbarten (schwarzen) Bildpixeln, die Nanopartikeln zugeordnet sind und Ermittlung der Größe bzw. der Anzahl der in der jeweiligen Fläche enthaltenen Bildpixel.

Softwarealgorithmen bzw. -programme, der vorstehend beschriebenen Art gehören üblicherweise zum Lieferumfang von modernen Transmissions- und Rasterelektronenmikroskopen oder sind als Option erhältlich. Alternativ hierzu können generische Bildanalyseprogramme, wie beipielsweise ImageJ (http://imagej.nih.gov/ij) verwandt werden.

Der Volumenanteil an Hohlraum in den Nanopartikeln wird mittels eines Transmissionselektronenmikroskops und einer Bildanalysesoftware, wie ImageJ bestimmt. Hierbei werden anhand digitalisierter transmissionselektronenmikroskopischer Aufnahmen mindestens 100, vorzugsweise mindestens 1000 Nanopartikel mithilfe der Bildanalysesoftware digital vermessen. Enthält ein Nanopartikel einen Hohlraum, so unterscheidet sich das transmissionselektronenmikroskopische Bild des betreffenden Nanopartikels von dem transmissionselektronenmikroskopischen Bild eines massiven Nanopartikels, das frei von Hohlräumen ist. Ein Nanopartikel (i) mit einem darin eingeschlossenen Hohlraum erscheint im transmissionselektronenmikroskopischen Bild je nach Kontrast als helle, respektive dunkle Fläche $F_1(i)$, die von einer dunklen, respektive hellen Fläche $F_2(i)$ ringförmig umschlossen ist (siehe Fig. 9a und 9b). Die helle Fläche $F_1(i)$ entspricht der maximalen Ausdehnung des Hohlraums in einer parallel zur Bildebene der transmissionselektronenmikroskopischen Abbildung angeordneten Schnittebene durch das Nanopartikel. Gleichermaßen repräsentiert die Gesamtfläche $F_1(i) + F_2(i)$ die maximale Ausdehnung des gesamten Nanopartikels (i) einschließlich des darin enthaltenen Hohlraums in einer parallel zur Bildebene der transmissionselektronenmikroskopischen Abbildung angeordneten Schnittebene durch das Nanopartikel (i). Die kugeläquivalenten Volumen $V_{NP}(i)$ des Nanopartikels (i) und eines darin enthaltenen Hohlraums $V_H(i)$ werden gemäß den Beziehungen

$$V_H(i) = \frac{4}{3}\frac{1}{\sqrt{\pi}}F_1(i)^{3/2}$$

$$V_{NP}(i) = \frac{4}{3}\frac{1}{\sqrt{\pi}}(F_1(i) + F_2(i))^{3/2}$$

berechnet. Der Volumenanteil des Hohlraums eines Nanopartikels (i) entspricht dem Quotienten

$$\frac{V_H(i)}{V_{NP}(i)} = \left(\frac{F_1(i)}{F_1(i) + F_2(i)}\right)^{3/2}$$

Der mittlere Volumenanteil der Hohlräume wird schließlich durch Mittelung über die Volumenanteile der Hohlräume von mindestens 100, vorzugsweise mehr als 1000 Nanopartikeln berechnet

$$\left\langle\frac{V_H}{V_{NP}}\right\rangle = \frac{1}{N}\sum_{i=1}^{N}\left(\frac{F_1(i)}{F_1(i) + F_2(i)}\right)^{3/2} \quad ; \quad N \geq 100$$

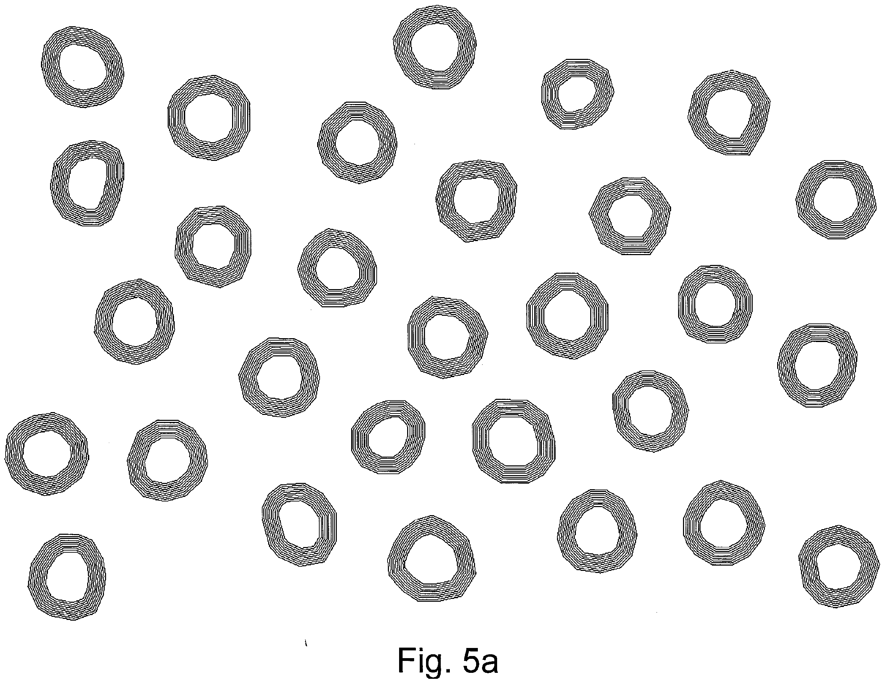

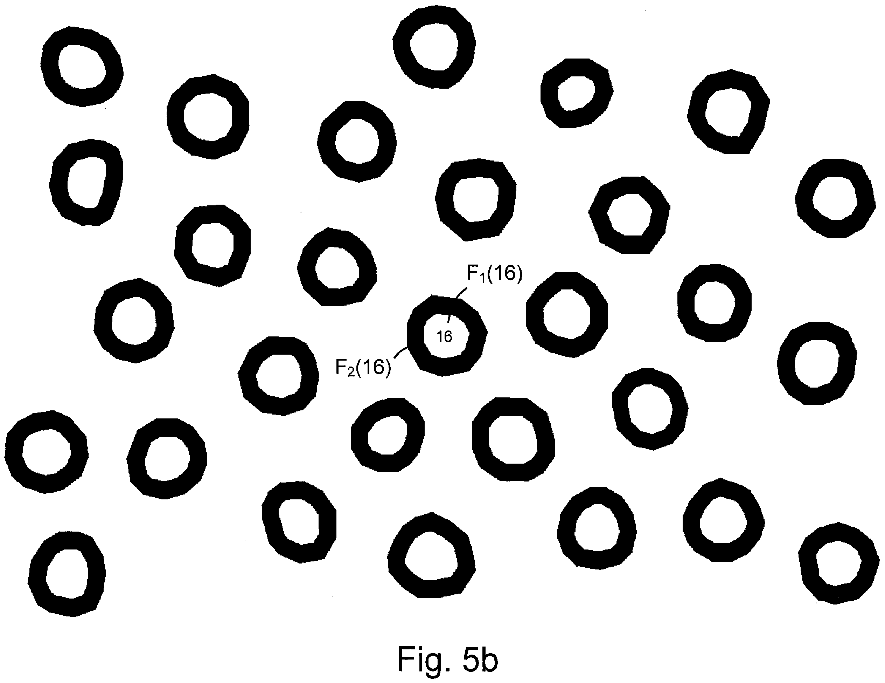

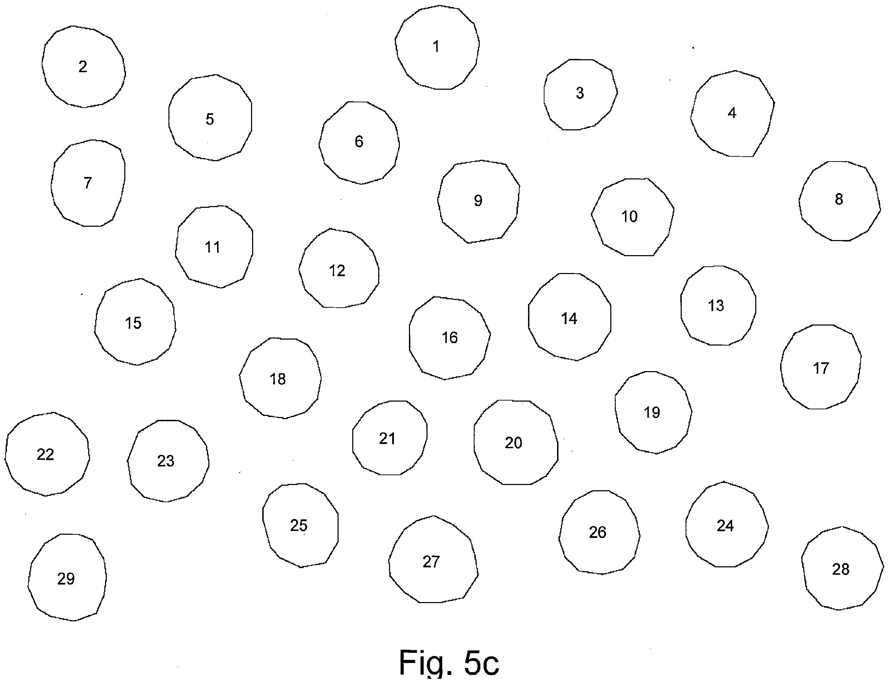

Das softwaregestützte Verfahren zur Auswertung von mittels Transmissionselektronenmikroskop aufgezeichneten digitalen Bilder von Nanopartikeln, die Hohlräume enthalten, entspricht im Wesentlichen dem vorstehend beschriebenen Verfahren zur Bestimmung der äquivalenten Durchmesser von Nanopartikeln, die mittels eines Rasterelektronenmikroskops als "massive" Körper abgebildet worden sind. Die Figuren 5a, 5b und 5c zeigen in schematischer Weise das mittels Transmissionselektronenmikroskop erzeugte Ausgangsbild und zwei im Rahmen der softwaregestützen Bildanalyse erhaltene Ergebnisse. In dem in Fig. 5a gezeigten Ausgangsbild sind schalenförmige Kristalllagen zu erkennen, wie sie bei fullerenartigen Nanopartikeln aus Wolframsulfid ($WS_{2-x}$) oder Molybdänsulfid ($MoS_{2-x}$) beobachtbar sind. Das in Fig. 5b gezeigte Bild ergibt sich aus dem Ausgangsbild der Fig. 5a durch Binarisierung gemäß Schwellwertfestsetzung sowie binärer Dilatation, gefolgt von binärer Erosion (sogenanntes Closing). Das in Fig. 5b gezeigte Bild wird sodann einer algorithmischen Partikeldetektion unterzogen, wobei für jedes Nanopartikel (i) die Flächen $F_1(i)$ und $F_2(i)$ registriert werden. In Fig. 5b sind die Flächen $F_1(i)$ und $F_2(i)$ für ein Nanopartikel (i) mit i = 16 gezeigt. Fig. 5c illustriert das Ergebnis der algorithmischen Partikelanalyse, bei der jedem Nanopartikel eine Nummer zugeordnet und charakteristische geometrische Parameter des abgebildeten Nanopartikels, wie die Flächen $F_1$ und $F_2$, die Schwerpunktskoordinaten und die Zirkularität ermittelt werden.

Der Sauerstoffgehalt des erfindungsgemäßen nanoskaligen Metallsulfids wird mittels energiedispersiver Röntgenspektroskopie unter Einsatz eines mit einem Siliziumdriftdetektor (SDD) ausgestatteten Rasterelektronenmikroskops gemessen. Der Siliziumdriftdetektor weist eine Detektionsfläche von 100 $mm^2$ auf und ist mit einem etwa 500 nm dicken Fenster aus einem polymeren Werkstoff ausgerüstet. Die mit energiedispersiver Röntgenspektroskopie erzielbare Auflösung beziehungsweise Nachweisgrenze für Sauerstoff liegt im Bereich von 0,1 bis 0,2 Gew-%, entsprechend 1000 bis 2000 ppm (=ppm Gewicht) beziehungsweise 1,55 bis 3,1 Atom-% für Sauerstoff (16 g/mol) in Wolframdisulfid (248 mol/g). Bei der Bestimmung des Sauerstoffgehalts mittels energiedispersiver Röntgenspektroskopie werden die optischen Parameter des Rasterelektronenmikroskops derart eingestellt, dass der Durchmesser des Elektronenstrahls an der Oberfläche der Nanopartikel aus Metallsulfid 0,5 bis 2 $\mu$m und die Stromstärke 5 bis 50 nA beträgt.

Zum Zweck der Kalibrierung und Verifikation der mittels energiedispersiver Röntgenspektroskopie erhaltenen Ergebnisse wird der Sauerstoffgehalt zudem mittels Trägergas-Schmelzextraktion gemessen. Bei der Trägergas-Schmelzextraktion wird eine Menge von etwa 1 g des nanoskaligen Metallsulfids in einem hochreinen Graphittiegel bei hohen Temperaturen bis zu 3000 °C in einem Inertgasstrom aus Helium, Argon oder Stickstoff geschmolzen und hierbei gebildetes Kohlenmonoxid und Kohlendioxid durch eine oder zwei parallel angeordnete Infrarot-Messzellen geführt und anhand der Infrarotabsorption die in der Probe enthaltene Menge an Sauerstoff bestimmt. Bei der Trägergas-Schmelzextraktion liegt die Nachweisgrenze für Sauerstoff unter 1 ppm (= ppm Gewicht).

**Patentansprüche**

1.    Verfahren zur Herstellung von nanoskaligen Metallsulfiden, umfassend die Schritte

(a) Bereitstellen von Nanopartikeln (30) aus Metall oder Metalloxid in einem mit einer Zuführeinrichtung (3) ausgerüsteten Vorlagebehälter (2);

(b) kontinuierliches Zuführen und Fluidisieren der Nanopartikel (30, 31) in einem Strom aus einem ersten Prozessgas, bestehend aus 10 bis 25 Vol.-% $H_2$, 75 bis 90 Vol.-% $H_2S$ und 0 bis 15 Vol.-% eines Inertgases, gewählt aus $N_2$, Ar oder einer Mischung davon, wobei die Nanopartikel (31) während einer Dauer von 30 bis 300 s bei einer Temperatur von 600 bis 900 °C in dem ersten Prozessgas fluidisiert sind;

(c) Ablegen der Nanopartikel (31) auf einer Oberfläche eines Schüttbetts (32) aus Nanopartikeln in einer Ofenkammer (6), wobei ein zweites Prozessgas aus 10 bis 25 Vol.-% $H_2$, 75 bis 90 Vol.-% $H_2S$ und 0 bis 15 Vol.-% eines Inertgases, gewählt aus $N_2$, Ar oder einer Mischung davon, oberhalb des Schüttbetts (32) in die Ofenkammer (6) geleitet und verbrauchtes Prozessgas in einem unteren Bereich des Schüttbetts (32) aus der Ofenkammer (6) abgeführt wird;

(d) Sulfidieren der in dem Schüttbett (32) in der Ofenkammer (6) vorliegenden Nanopartikel bei einer Temperatur von 600 bis 900 °C während einer Dauer von 30 bis 200 min; und

(e) kontinuierliches Abführen von Nanopartikeln aus der Ofenkammer (32) in einem unteren Bereich des Schüttbetts (32).

2. Verfahren nach Anspruch 1, **dadurch gekennzeichnet, dass** die in Schritt (b) dem fluidisierenden Gasstrom im Mittel pro Zeiteinheit zugeführte molare Menge an Metall und die in Schritt (e) im Mittel pro Zeiteinheit aus der Ofenkammer (6) abgeführte molare Menge an Metall gleich groß sind.

3. Verfahren nach Anspruch 1 oder 2, **dadurch gekennzeichnet, dass** das Metalloxid gewählt ist aus Oxiden von Wolfram, Molybdän, Titan, Zinn, Zink, Bismut, Antimon, Eisen oder einer Mischung der vorstehenden Metalle.

4. Verfahren nach Anspruch 1, 2 oder 3, **dadurch gekennzeichnet, dass** die Nanopartikel aus Metalloxid einen äquivalenten Durchmesser von 10 bis 200 nm haben.

5. Verfahren nach Anspruch 1, 2, 3 oder 4, **dadurch gekennzeichnet, dass** in Schritt (b) dem fluidisierenden Gasstrom 3 mg bis 3000 g Nanopartikel pro Sekunde zugeführt werden.

6. Verfahren nach Anspruch 1, 2, 3, 4 oder 5, **dadurch gekennzeichnet, dass** die Nanopartikel in Schritt (b) bei einer Temperatur von 700 bis 850 °C fluidisiert werden.

7. Verfahren nach Anspruch 1, 2, 3, 4, 5 oder 6, **dadurch gekennzeichnet, dass** die Nanopartikel in Schritt (d) bei einer Temperatur von 700 bis 850 °C sulfidiert werden.

8. Verfahren nach Anspruch 1, 2, 3, 4, 5, 6 oder 7, **dadurch gekennzeichnet, dass** in Schritt (b) die Nanopartikel in einer mit der Ofenkammer (6) verbundenen Fluidisierungskammer (4) fluidisiert werden und mithilfe eines Gasantriebs (20) Prozessgas aus der Ofenkammer (6) in die Fluidisierungskammer (4) geleitet wird.

9. Material bestehend aus 500 bis 100000 g Nanopartikeln aus Metallsulfid mit einem äquivalenten Durchmesser von 10 bis 200 nm **dadurch gekennzeichnet, dass** das Material einen Sauerstoffgehalt von kleiner 5 Atom-% aufweist und die Nanopartikel im Mittel weniger als 5 Vol-% Hohlraum enthalten.

10. Material nach Anspruch 9, **dadurch gekennzeichnet, dass** das Material aus Nanopartikeln aus Wolframsulfid, aus Molybdänsulfid, aus Titansulfid, aus Zinnsulfid, aus Zinksulfid, aus Bismutsulfid, aus Antimonsulfid, aus Eisensulfid oder einer Mischung der vorstehenden Sulfide besteht.

11. Material nach Anspruch 9 oder 10, **dadurch gekennzeichnet, dass** das Material einen Sauerstoffgehalt von kleiner 3 Atom-% aufweist.

12. Material nach Anspruch 9, 10 oder 11, **dadurch gekennzeichnet, dass** die Nanopartikel im Mittel weniger als 3 Vol-% Hohlraum enthalten.

13. Vorrichtung (1) zur Herstellung von Nanopartikeln aus Metallsulfid, umfassend

- einen Vorlagebehälter (2) für Nanopartikel (30) aus Metall oder Metalloxid;
- eine Fluidisierungskammer (4) mit einer Heizung (5), die dafür eingerichtet ist, die Wandung der Fluidisierungskammer (4) teilweise oder vollständig auf eine Temperatur von 600 bis 1200°C aufzuheizen;

- eine Zuführeinrichtung (3), die für die kontinuierliche Übertragung von Nanopartikeln aus dem Vorlagebehälter (2) in die Fluidisierungskammer (4) eingerichtet ist;
- eine mit der Fluidisierungskammer (4) verbundene Ofenkammer (6) mit einer Heizung (7), die dafür eingerichtet ist, die Wandung der Ofenkammer (6) teilweise oder vollständig auf eine Temperatur von 600 bis 1200 °C aufzuheizen;
- mindestens eine mit der Fluidisierungskammer (4) und mit der Ofenkammer (6) verbundene Gasversorgungseinheit (12), die dafür eingerichtet ist, die Fluidisierungskammer (4) mit einem ersten Prozessgas und die Ofenkammer (6) mit einem zweiten Prozessgas zu versorgen, wobei

- das erste Prozessgas aus 10 bis 25 Vol.-% $H_2$, 75 bis 90 Vol.-% $H_2S$ und 0 bis 15 Vol.-% eines Inertgases, gewählt aus $N_2$, Ar oder einer Mischung davon besteht;
- das zweite Prozessgas aus 10 bis 25 Vol.-% $H_2$, 75 bis 90 Vol.-% $H_2S$ und 0 bis 15 Vol.-% eines Inertgases, gewählt aus $N_2$, Ar oder einer Mischung davon besteht; und

- mindestens eine in einem unteren Bereich der Ofenkammer (6) angeordnete Ableitung (8) für verbrauchtes Prozessgas; und
- mindestens eine in einem unteren Bereich der Ofenkammer (6) angeordnete Abführeinrichtung (11), die für die kontinuierliche Entnahme von Nanopartikeln aus der Ofenkammer (6) eingerichtet ist.

**14.** Vorrichtung (1) nach Anspruch 13, **dadurch gekennzeichnet, dass** die Fluidisierungskammer (4) als Rohrleitung ausgebildet ist und eine Länge von 0,2 bis 10 m hat.

**15.** Vorrichtung (1) nach Anspruch 13 oder 14, **dadurch gekennzeichnet, dass** die Ofenkammer (6) oder die Ableitung (8) mit einer gaspermeablen Membran (9) aus einem temperaturbeständigen Werkstoff, wie Keramik oder Metall ausgerüstet ist.

**16.** Vorrichtung (1) nach Anspruch 13, 14 oder 15, **dadurch gekennzeichnet, dass** die Vorrichtung (1) einen Gaswäscher und/oder einen Gasfilter umfasst, der über die Ableitung (8) mit der Ofenkammer (6) verbunden ist.

**Claims**

**1.** Process for producing nanoscale metal sulfides, comprising the steps of

(a) providing nanoparticles (30) composed of metal or metal oxide in a reservoir vessel (2) equipped with a supply facility (3);
(b) continuously supplying and fluidizing the nanoparticles (30, 31) in a stream of a first process gas, consisting of 10 to 25 % by volume of $H_2$, 75 to 90 % by volume of $H_2S$ and 0 to 15 % by volume of an inert gas selected from $N_2$, Ar or a mixture thereof, where the nanoparticles (31) are fluidized in the first process gas for a time of 30 to 300 s at a temperature of 600 to 900 °C;
(c) depositing the nanoparticles (31) on a surface of a dumped bed (32) of nanoparticles in an oven chamber (6), where a second process gas composed of 10 to 25 % by volume of $H_2$, 75 to 90 % by volume of $H_2S$ and 0 to 15 % by volume of an inert gas selected from $N_2$, Ar or a mixture thereof is passed above the dumped bed (32) into the oven chamber (6), and spent process gas is removed from the oven chamber (6) in a lower region of the dumped bed (32);
(d) sulfiding the nanoparticles present in the dumped bed (32) in the oven chamber (6), at a temperature of 600 to 900 °C for a time of 30 to 200 min; and
(e) continuously removing nanoparticles from the oven chamber (32) in a lower region of the dumped bed (32).

**2.** Process according to Claim 1, **characterized in that** the molar amount of metal supplied to the fluidizing gas stream on average per unit time in step (b) is the same as the molar amount of a metal removed from the oven chamber (6) on average per unit time in step (e).

**3.** Process according to Claim 1 or 2, **characterized in that** the metal oxide is selected from oxides of tungsten, molybdenum, titanium, tin, zinc, bismuth, antimony, iron or of a mixture of the preceding metals.

**4.** Process according to Claim 1, 2 or 3, **characterized in that** the nanoparticles composed of metal oxide have an equivalent diameter of 10 to 200 nm.

5. Process according to Claim 1, 2, 3 or 4, **characterized in that** in step (b) 3 mg to 3000 g of nanoparticles are supplied per second to the fluidizing gas stream.

6. Process according to Claim 1, 2, 3, 4 or 5, **characterized in that** the nanoparticles in step (b) are fluidized at a temperature of 700 to 850 °C.

7. Process according to Claim 1, 2, 3, 4, 5 or 6, **characterized in that** the nanoparticles in step (d) are sulfided at a temperature of 700 to 850 °C.

8. Process according to Claim 1, 2, 3, 4, 5, 6 or 7, **characterized in that** in step (b) the nanoparticles are fluidized in a fluidizing chamber (4) connected to the oven chamber (6) and process gas is passed from the oven chamber (6) into the fluidizing chamber (4) by means of a gas propulsion system (20) .

9. Material consisting of 500 to 100 000 g of nanoparticles composed of metal sulfide having an equivalent diameter of 10 to 200 nm, **characterized in that** the material has an oxygen content of less than 5 at% and the nanoparticles contain on average less than 5 % by volume of void.

10. Material according to Claim 9, **characterized in that** the material consists of nanoparticles composed of tungsten sulfide, of molybdenum sulfide, of titanium sulfide, of tin sulfide, of zinc sulfide, of bismuth sulfide, of antimony sulfide, of iron sulfide or of a mixture of the preceding sulfides.

11. Material according to Claim 9 or 10, **characterized in that** the material has an oxygen content of less than 3 at%.

12. Material according to Claim 9, 10 or 11, **characterized in that** the nanoparticles contain on average less than 3 % by volume of void.

13. Apparatus (1) for producing nanoparticles composed of metal sulfide, comprising

   - a reservoir vessel (2) for nanoparticles (30) composed of metal or metal oxide;
   - a fluidizing chamber (4) having a heating system (5) which is adapted to heat the wall of the fluidizing chamber (4) partly or completely to a temperature of 600 to 1200 °C;
   - a supply facility (3) which is adapted for the continuous transfer of nanoparticles from the reservoir vessel (2) into the fluidizing chamber (4);
   - an oven chamber (6) connected to the fluidizing chamber (4) and having a heating system (7) which is adapted to heat the wall of the oven chamber (6) partly or completely to a temperature of 600 to 1200 °C;
   - at least one gas supply unit (12) which is connected to the fluidizing chamber (4) and to the oven chamber (6) and which is adapted to supply the fluidizing chamber (4) with a first process gas and the oven chamber (6) with a second process gas, where

      - the first process gas consists of 10 to 25 % by volume of $H_2$, 75 to 90 % by volume of $H_2S$ and 0 to 15 % by volume of an inert gas selected from $N_2$, Ar or a mixture thereof;
      - the second process gas consists of 10 to 25 % by volume of $H_2$, 75 to 90 % by volume of $H_2S$ and 0 to 15 % by volume of an inert gas selected from $N_2$, Ar or a mixture thereof; and

      - at least one discharge line (8) for spent process gas, which is arranged in a lower region of the oven chamber (6); and
      - at least one removal facility (11) which is arranged in a lower region of the oven chamber (6) and which is adapted for continuous withdrawal of nanoparticles from the oven chamber (6).

14. Apparatus (1) according to Claim 13, **characterized in that** the fluidizing chamber (4) is configured as a pipeline and has a length of 0.2 to 10 m.

15. Apparatus (1) according to Claim 13 or 14, **characterized in that** the oven chamber (6) or the discharge line (8) is equipped with a gas-permeable membrane (9) composed of a temperature-resistant material, such as ceramic or metal.

16. Apparatus (1) according to Claim 13, 14 or 15, **characterized in that** the apparatus (1) comprises a gas scrubber and/or a gas filter which is connected via the discharge line (8) to the oven chamber (6).

**Revendications**

1. Procédé de fabrication de sulfures métalliques nanométriques, comprenant les étapes consistant en

   (a) la mise à disposition de nanoparticules (30) de métal ou oxyde métallique dans un récipient de stockage (2) équipé d'un appareil d'amenée (3) ;
   (b) l'amenée en continu et la fluidisation des nanoparticules (30, 31) dans un courant d'un premier gaz de processus, se composant de 10 à 25 % en volume de $H_2$, de 75 à 90 % en volume de $H_2S$ et de 0 à 15 % en volume d'un gaz inerte, sélectionné parmi le $N_2$, Ar ou un mélange de ceux-ci, dans lequel les nanoparticules (31) sont fluidisées pendant une durée de 30 à 300 s à une température de 600 à 900 °C dans le premier gaz de processus ;
   (c) le dépôt des nanoparticules (31) sur une surface d'un lit tassé (32) de nanoparticules dans une chambre de four (6), dans lequel un second gaz de processus est conduit de 10 à 25 % en volume de $H_2$, de 75 à 90 % en volume de $H_2S$ et de 0 à 15 % en volume d'un gaz inerte, sélectionné parmi le $N_2$, Ar ou un mélange de ceux-ci, au-dessus du lit tassé (32) dans la chambre de four (6) et du gaz de processus consommé est évacué de la chambre de four (6) dans une zone inférieure du lit tassé (32) ;
   (d) la sulfuration des nanoparticules se trouvant dans le lit tassé (32) dans la chambre de four (6) à une température de 600 à 900 °C pendant une durée de 30 à 200 min; et
   (e) l'évacuation continue de nanoparticules de la chambre de four (32) dans une zone inférieure du lit tassé (32).

2. Procédé selon la revendication 1, **caractérisé en ce que** la quantité molaire de métal amenée à l'étape (b) au courant de gaz fluidisant en moyenne par unité de temps et la quantité molaire de métal évacuée à l'étape (e) en moyenne par unité de temps de la chambre de four (6) sont de même grandeur.

3. Procédé selon la revendication 1 ou 2, **caractérisé en ce que** l'oxyde métallique est sélectionné parmi des oxydes de tungstène, de molybdène, de titane, de étain, de zinc, de bismuth, d'antimoine, fer ou un mélange des métaux précédents.

4. Procédé selon la revendication 1, 2 ou 3, **caractérisé en ce que** les nanoparticules d'oxyde métallique présentent un diamètre équivalent de 10 à 200 nm.

5. Procédé selon la revendication 1, 2, 3 ou 4, **caractérisé en ce qu'**à l'étape (b), 3 mg à 3 000 g de nanoparticules par seconde sont amenées au courant de gaz fluidisant.

6. Procédé selon la revendication 1, 2, 3, 4 ou 5, **caractérisé en ce que** les nanoparticules sont fluidisées à l'étape (b) à une température de 700 à 850 °C.

7. Procédé selon la revendication 1, 2, 3, 4, 5 ou 6, **caractérisé en ce que** les nanoparticules sont sulfurées à l'étape (d) à une température de 700 à 850 °C.

8. Procédé selon la revendication 1, 2, 3, 4, 5, 6 ou 7, **caractérisé en ce qu'**à l'étape (b), les nanoparticules sont fluidisées dans une chambre de fluidisation (4) reliée à la chambre de four (6) et du gaz de processus est conduit de la chambre de four (6) dans la chambre de fluidisation (4) à l'aide d'un entraînement de gaz (20).

9. Matériau se composant de 500 à 100 000 g de nanoparticules de sulfure de métal avec un diamètre équivalent de 10 à 200 nm, **caractérisé en ce que** le matériau présente une teneur en oxygène de moins de 5 % d'atome et les nanoparticules contiennent en moyenne moins de 5 % en volume d'espace creux.

10. Matériau selon la revendication 9, **caractérisé en ce que** le matériau de nanoparticules se compose de sulfure de tungstène, de sulfure de molybdène, de sulfure de titane, de sulfure d'étain, de sulfure de zinc, de sulfure de bismuth, de sulfure d'antimoine, de sulfure de fer ou d'un mélange des sulfures précédents.

11. Matériau selon la revendication 9 ou 10, **caractérisé en ce que** le matériau présente une teneur en oxygène de moins de 3 % d'atome.

12. Matériau selon la revendication 9, 10 ou 11, **caractérisé en ce que** les nanoparticules contiennent en moyenne moins de 3 % en volume d'espace creux.

**13.** Dispositif (1) pour la fabrication de nanoparticules de sulfure de métal, comprenant

- un récipient de stockage (2) pour des nanoparticules (30) de métal ou oxyde métallique ;
- une chambre de fluidisation (4) avec un chauffage (5) qui est aménagé afin de chauffer la paroi de la chambre de fluidisation (4) partiellement ou complètement à une température de 600 à 1 200 °C ;
- un appareil d'amenée (3) qui est aménagé pour la transmission continue de nanoparticules du récipient de stockage (2) dans la chambre de fluidisation (4) ;
- une chambre de four (6) reliée à la chambre de fluidisation (4) avec un chauffage (7) qui est aménagé afin de chauffer la paroi de la chambre de four (6) partiellement ou complètement à une température de 600 à 1 200 °C ;
- au moins une unité d'alimentation en gaz (12) reliée à la chambre de fluidisation (4) et à la chambre de four (6) qui est aménagée afin d'alimenter la chambre de fluidisation (4) en un premier gaz de processus et la chambre de four (6) en un second gaz de processus, dans lequel
- le premier gaz de processus se compose de 10 à 25 % en volume de $H_2$, de 75 à 90 % en volume de $H_2S$ et de 0 à 15 % en volume d'un gaz inerte, sélectionné parmi le $N_2$, Ar ou un mélange de ceux-ci ;
- le second gaz de processus se compose de 10 à 25 % en volume de $H_2$, de 75 à 90 % en volume de $H_2S$ et de 0 à 15 % en volume d'un gaz inerte, sélectionné parmi le $N_2$, Ar ou un mélange de ceux-ci ; et
- au moins une dérivation (8) agencée dans une zone inférieure de la chambre de four (6) pour du gaz de processus consommé ; et
- au moins un appareil d'évacuation (11) agencé dans une zone inférieure de la chambre de four (6) qui est aménagé pour le retrait continu de nanoparticules de la chambre de four (6).

**14.** Dispositif (1) selon la revendication 13, **caractérisé en ce que** la chambre de fluidisation (4) est réalisée en tant que conduite et présente une longueur de 0,2 à 10 m.

**15.** Dispositif (1) selon la revendication 13 ou 14, **caractérisé en ce que** la chambre de four (6) ou la dérivation (8) est équipée d'une membrane perméable au gaz (9) en un matériau résistant à la température tel que la céramique ou le métal.

**16.** Dispositif (1) selon la revendication 13, 14 ou 15, **caractérisé en ce que** le dispositif (1) comporte un épurateur de gaz et/ou un filtre à gaz qui est relié par la dérivation (8) à la chambre de four (6).

Fig. 1

Fig. 2

Fig. 3

Fig. 4a

Fig. 4b

Fig. 4c

Fig. 4d

Fig. 4e

Fig. 5a

Fig. 5b

Fig. 5c

EP 3 414 203 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 60128790 T2
- CN 102849799 A
- WO 2001066462 A2
- CN 103101978 B

**In der Beschreibung aufgeführte Nicht-Patentliteratur**

- **F. XU ; N. WANG ; H. CHANG ; Y. XIA ; Y. ZHU.** ontinuous Production of IF-WS2 Nanoparticles by a Rotary Process. *Inorganics,* 2014, vol. 2, 313-333

- **SCHRIFT J. LI ; T. MA ; L. ZHOU ; T. ZHANG ; Q. ZHU ; H. LI.** Synthesis of Fullerene-like WS2 Nanoparticles in a Particulately Fluidized Bed: Kinetics and Reaction Phase Diagram. *Ind. Eng. Chem. Res.,* 2014, vol. 53, 592-600